# EUROPEAN PATENT APPLICATION

(11) **EP 4 598 085 A1**
(43) Date of publication of application: **06.08.2025**
(21) Application number: 23885805.4
(22) Date of filing: 01.11.2023
(51) Int. Cl.: H04W 16/26, H04W 36/08

(54) **MOBILE COMMUNICATION SYSTEM, RELAY DEVICE, AND NETWORK DEVICE**

(30) Priority: 02.11.2022 US 202263421779 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2023/039404
(87) International publication number: WO 2024/096051

(57) **Abstract**

A mobile communication system includes a network and a relay apparatus configured to perform relay transmission for relaying a radio signal transmitted between the network and a user equipment. The relay apparatus is configured to connect to a cell selected through cell selection or cell reselection and perform the relay transmission. Cell information for specifying a desired cell determined to be a connection destination of the repeater apparatus is communicated between the network and the repeater apparatus or between entities in the network.

## Description

### TECHNICAL FIELD

The present disclosure relates to a mobile communication system, a relay apparatus, and a network apparatus used in a mobile communication system.

### BACKGROUND OF INVENTION

In recent years, a mobile communication system of the fifth generation (5G) has been attracting attention. New Radio (NR), which is a radio access technology of the 5G system, is capable of wide-band transmission via a high frequency band as opposed to Long Term Evolution (LTE), which is a fourth-generation radio access technology.

Since radio signals (radio waves) in the high frequency band such as a millimeter wave band or a terahertz wave band have high rectilinearity, reduction of coverage of a base station is a problem. In order to solve such a problem, a repeater apparatus that is a type of relay apparatus relaying radio signals between the network and user equipment and can be controlled from a network is attracting attention (see, for example, Non-Patent Document 1). Such a repeater apparatus can extend the coverage of the base station while suppressing occurrence of interference by, for example, amplifying a radio signal received from the base station and transmitting the radio signal through directional transmission.

### CITATION LIST

### NON-PATENT LITERATURE

Non-Patent Document 1: 3GPP Contribution: RP-213700, "New SI: Study on NR Network-controlled Repeaters"

### SUMMARY

A mobile communication system according to a first aspect includes a network; and a relay apparatus configured to perform relay transmission for relaying a radio signal transmitted between the network and a user equipment. The relay apparatus is configured to connect to a cell selected through cell selection or cell reselection and perform the relay transmission. Cell information on a connected cell to which the relay apparatus is connectable is configured, from a network apparatus operating the network, for the relay apparatus.

A relay apparatus of a second aspect is a relay apparatus used in a mobile communication system, and includes a repeater configured to perform relay transmission for relaying a radio signal transmitted between a network and a user equipment; and a control terminal configured to connect to a cell selected through cell selection or cell reselection and control the relay transmission. The control terminal is configured, from a network apparatus operating the network, with cell information related to a connected cell to which the relay apparatus is connectable.

A network apparatus according to a third aspect is a network apparatus for operating a mobile communication system, and includes a communicator configured to communicate with a relay apparatus or another network apparatus. The relay apparatus is an apparatus configured to perform relay transmission for relaying a radio signal transmitted between the network and a user equipment. The communicator configures, for the relay apparatus, cell information related to a connected cell to which the relay apparatus is connectable.

### BRIEF DESCRIPTION OF THE DRAWINGS

FIG. 1 is a diagram illustrating a configuration of a mobile communication system according to an embodiment.
FIG. 2 is a diagram illustrating a configuration of a protocol stack of a wireless interface of a user plane handling data.
FIG. 3 is a diagram illustrating a configuration of a protocol stack of a wireless interface of a control plane handling signaling (control signal).
FIG. 4 is a diagram illustrating an application scenario for a relay apparatus (NCR apparatus) according to a first embodiment.
FIG. 5 is a diagram illustrating an application scenario for the relay apparatus (NCR apparatus) according to the first embodiment.
FIG. 6 is a diagram illustrating a control method for the relay apparatus (NCR apparatus) according to the first embodiment.
FIG. 7 is a diagram illustrating a configuration example of a protocol stack in a mobile communication system including the relay apparatus (NCR apparatus) according to the first embodiment.
FIG. 8 is a diagram illustrating a configuration example of the relay apparatus (NCR apparatus) according to the first embodiment.
FIG. 9 is a diagram illustrating a configuration example of a base station (gNB) according to an embodiment.
FIG. 10 is a diagram illustrating an example of downlink signaling from the base station (gNB) to a control terminal (NCR-MT) according to the first embodiment.
FIG. 11 is a diagram illustrating an example of uplink signaling from the control terminal (NCR-MT) to the base station (gNB) according to the first embodiment.
FIG. 12 is a diagram illustrating an example of an overall operation sequence of the mobile communication system according to the first embodiment.
FIG. 13 is a diagram illustrating beam sweeping according to the first embodiment.
FIG. 14 is a diagram illustrating an operation relating to load balancing according to the first embodiment.
FIG. 15 is a diagram illustrating a link (connection) between the NCR apparatus and the gNB according to the first embodiment.
FIG. 16 is a diagram illustrating an example of an operation of the mobile communication system according to a first operation pattern of load balancing in the first embodiment.
FIG. 17 is a diagram illustrating an example of an operation of the mobile communication system according to a second operation pattern of load balancing in the first embodiment.
FIG. 18 is a diagram illustrating connection control of the relay apparatus (NCR apparatus) to a desired cell in the first embodiment.
FIG. 19 is a diagram illustrating an example of an operation of the mobile communication system according to a first operation pattern of connection control in the first embodiment.
FIG. 20 is a diagram illustrating an example of an operation of the mobile communication system according to a second operation pattern of the connection control in the first embodiment.
FIG. 21 is a diagram illustrating an example of an operation of the mobile communication system according to a third operation pattern of the connection control in the first embodiment.
FIG. 22 is a diagram illustrating an example of an operation of the mobile communication system according to a fourth operation pattern of the connection control in the first embodiment.
FIG. 23 is a diagram illustrating another example of an operation of a mobile communication system according to the fourth operation pattern of the connection control in the first embodiment.
FIG. 24 is a diagram illustrating an example of an operation of the mobile communication system according to a fifth operation pattern of the connection control in the first embodiment.
FIG. 25 is a diagram illustrating an example of an operation of the mobile communication system according to a sixth operation pattern of the connection control in the first embodiment.
FIG. 26 is a diagram illustrating a relay apparatus (RIS apparatus) according to a second embodiment.
FIG. 27 is a diagram illustrating the relay apparatus (RIS apparatus) according to the second embodiment.

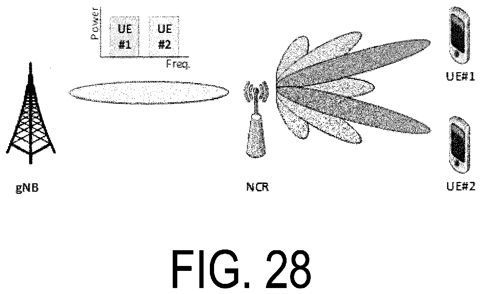

FIG. 28 is a diagram illustrating a multi-beam NCR.

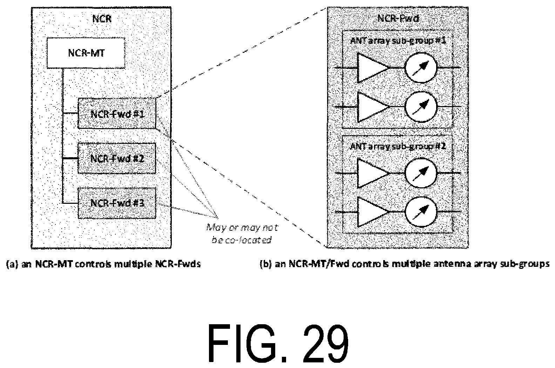

FIG. 29 is a diagram illustrating options for a management model of a multi-beam repeater.
FIG. 30 is a diagram illustrating a CA/DC configuration of the NCR-MT.

### DESCRIPTION OF EMBODIMENTS

A mobile communication system according to an embodiment will be described with reference to the drawings. In the description of the drawings, the same or similar parts are denoted by the same or similar reference signs.

### (1) First Embodiment

A first embodiment will be described first. A relay apparatus according to the present embodiment is a repeater apparatus that can be controlled from a network.

### (1.1) Overview of Mobile Communication System

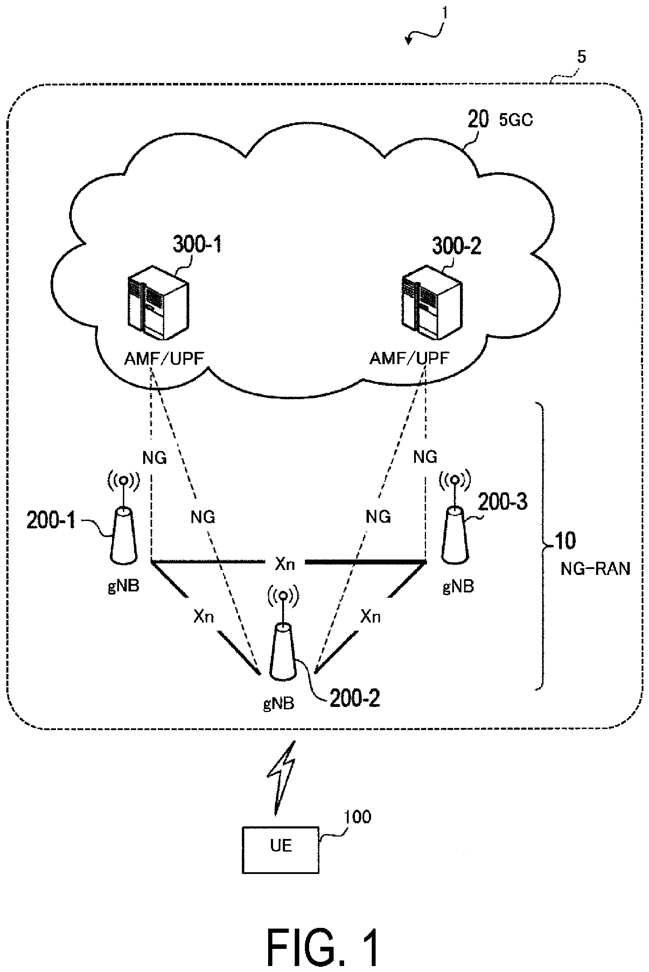

FIG. 1 is a diagram illustrating a configuration of a mobile communication system according to the present embodiment. A mobile communication system 1 complies with the 5th Generation System (5GS) of the 3rd Generation Partnership Project (3GPP; registered trademark, the same applies below) standard. Hereinafter, 5GS will be described as an example, but a long term evolution (LTE) system may be at least partially applied to the mobile communication system. Alternatively, a sixth generation (6G) system may be at least partially applied to the mobile communication system.

The mobile communication system 1 includes user equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 constitute a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (vehicle UE), and a flying object or an apparatus provided on a flying object (aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

The gNB 200 may be functionally divided into a central unit (CU) and a distributed unit (DU). The CU controls the DU. The CU is a unit including upper layers included in a protocol stack described below, such as an RRC layer, an SDAP layer, and a PDCP layer, for example. The CU is connected to a core network via an NG interface which is a backhaul interface. The CU is connected to an adjacent base station via an Xn interface, which is an inter-base station interface. The DU forms a cell. The DU 202 is a unit including lower layers included in the protocol stack described below, such as an RLC layer, a MAC layer, and a PHY layer, for example. The DU is connected to the CU via an F1 interface which is a fronthaul interface.

The gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

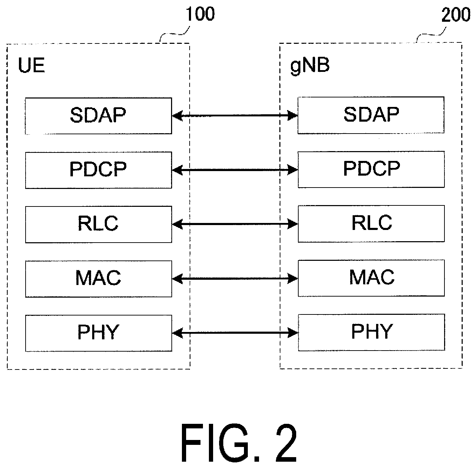

FIG. 2 is a diagram illustrating a configuration of a protocol stack of a wireless interface of a user plane handling data.

A radio interface protocol of the user plane includes a PHYsical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. The PHY layer of the UE 100 receives downlink control information (DCI) transmitted from the gNB 200 over a physical downlink control channel (PDCCH). Specifically, the UE 100 performs blind decoding of the PDCCH using a radio network temporary identifier (RNTI) and acquires successfully decoded DCI as DCI addressed to the UE 100. The DCI transmitted from the gNB 200 is appended with cyclic redundancy code (CRC) parity bits scrambled by the RNTI.

The gNB 200 transmits a synchronization signal block (SSB: Synchronization Signal/PBCH block). For example, the SSB includes four consecutive Orthogonal Frequency Division Multiplex (OFDM) symbols, and a primary synchronization signal (PSS), a secondary synchronization signal (SSS), a physical broadcast channel (PBCH)/master information block (MIB), and a demodulation reference signal (DMRS) of the PBCH are disposed. A bandwidth of the SSB is, for example, a bandwidth of 240 consecutive subcarriers, that is, 20RB.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of quality of service (QoS) control performed by a core network and a radio bearer as the unit of QoS control performed by an Access Stratum (AS). When the RAN is connected to the EPC, the SDAP need not be provided.

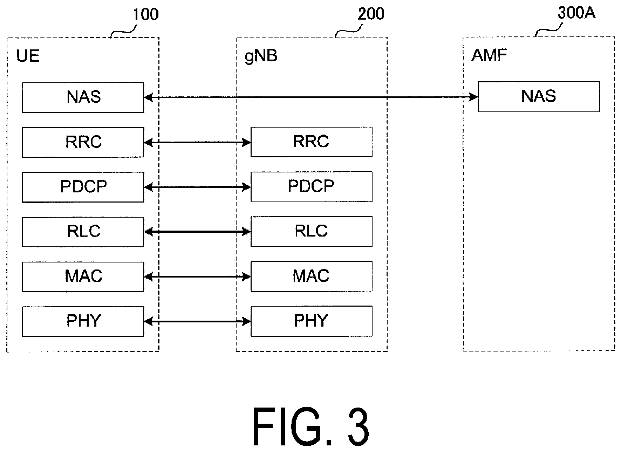

FIG. 3 is a diagram illustrating a configuration of a protocol stack of a wireless interface of a control plane handling signaling (a control signal).

The protocol stack of the wireless interface of the control plane includes a Radio Resource Control (RRC) layer and a Non-Access Stratum (NAS) layer instead of the SDAP layer illustrated in FIG. 2.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer that is positioned upper than the RRC layer performs session management, mobility management, and the like. NAS signaling is transmitted between the NAS layer of the UE 100 and the NAS layer of an AMF 300A. The UE 100 includes an application layer other than the protocol of the radio interface. A layer lower than the NAS layer is referred to as an AS layer.

### (1.2) One Example of Application Scenario for Relay Apparatus

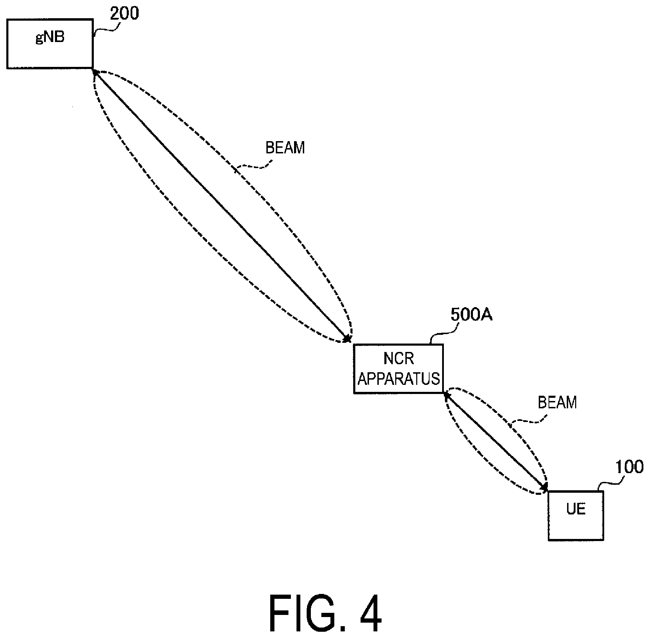

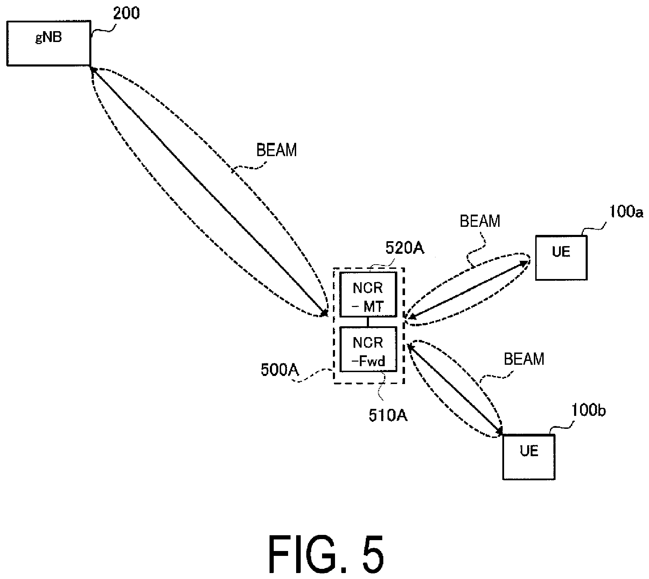

FIGs. 4 and 5 are diagrams illustrating an example of an application scenario of the NCR apparatus according to the present embodiment.

The 5G/NR is capable of wide-band transmission via a high frequency band compared to the 4G/LTE. Since radio signals in the high frequency band such as a millimeter wave band or a terahertz wave band have high rectilinearity, a problem is reduction of coverage of the gNB 200. In FIG. 4, the UE 100 may be located outside a coverage area of the gNB 200, for example, outside an area where the UE 100 can receive radio signals directly from the gNB 200. The UE 100 may not communicate with the gNB 200 within a line of sight because of obstacles existing between the gNB 200 and the UE 100.

As illustrated in FIG. 4, a repeater apparatus 500A that is a type of a relay apparatus relaying radio signals between the gNB 200 and the UE 100, and can be controlled from the network is introduced into the mobile communication system 1. Hereinafter, such a repeater apparatus is referred to as a network-controlled repeater (NCR) apparatus. Such a repeater apparatus may be referred to as a smart repeater apparatus.

For example, the NCR apparatus 500A amplifies a radio signal (radio wave) received from the gNB 200 and transmits the radio signal through directional transmission. To be specific, the NCR apparatus 500A receives a radio signal transmitted by the gNB 200 through beamforming. The NCR apparatus 500A amplifies the received radio signal without demodulation and modulation and transmits the amplified radio signal through the directional transmission. Here, the NCR apparatus 500A may transmit the radio signal with a fixed directivity (beam). The NCR apparatus 500A may transmit a radio signal with a variable (adaptive) directional beam. This can efficiently extend the coverage of the gNB 200. Although in the present embodiment, it is assumed that the NCR apparatus 500A is applied to downlink communication from the gNB 200 to the UE 100, the NCR apparatus 500A can also be applied to uplink communication from the UE 100 to the gNB 200.

As illustrated in FIG. 5, a new UE (hereinafter referred to as an "NCR-MT (Mobile termination)") 100B that is a type of the control terminal for controlling the NCR apparatus 500A is introduced. That is, the NCR apparatus 500A includes an NCR-Fwd (Forward) 510A, which is a type of a repeater that relays a radio signal transmitted between the gNB 200 and the UE 100, concretely, changes a propagation state of the radio signal without demodulating or modulating the radio signal, and an NCR-MT 520A that performs wireless communication with the gNB 200 to control the NCR-Fwd 510A. Thus, the NCR-MT 520A controls the NCR apparatus 500A in cooperation with the gNB 200 by establishing a wireless connection to the gNB 200 and performing wireless communication to the gNB 200. Accordingly, efficient coverage extension can be realized using the NCR apparatus 500A. The NCR-MT 520A controls the NCR apparatus 500A according to control from the gNB 200.

The NCR-MT 520A may be configured separately from the NCR-Fwd 510A. For example, the NCR-MT 520A may be located near the NCR-Fwd 510A and may be electrically connected to the NCR-Fwd 510A. The NCR-MT 520A may be connected to the NCR-Fwd 510A by wire or wireless. The NCR-MT 520A may be configured to be integrated with the NCR-Fwd 510A. The NCR-MT 520A and the NCR-Fwd 510A may be fixedly installed at a coverage edge (cell edge) of the gNB 200, or on a wall surface or window of any building, for example. The NCR-MT 520A and the NCR-Fwd 510A may be installed in, for example, a vehicle and be movable. One NCR-MT 520A may control a plurality of NCR-Fwds 510A.

In the example illustrated in FIG. 5, the NCR apparatus 500A (NCR-Fwd 510A) dynamically or semi-statically changes a beam to be transmitted or received. For example, the NCR-Fwd 510A forms a beam toward each of a UE 100a and a UE 100b. The NCR-Fwd 510A may also form a beam toward the gNB 200. For example, in a communication resource between the gNB 200 and the UE 100a, the NCR-Fwd 510A transmits a radio signal received from the gNB 200 toward the UE 100a through beamforming and/or transmits a radio signal received from the UE 100a toward the gNB 200 through beamforming. In a communication resource between the gNB 200 and the UE 100b, the NCR-Fwd 510A transmits the radio signal received from the gNB 200 toward the UE 100b through beamforming and/or transmits the radio signal received from the UE 100b toward the gNB 200 through beamforming. Instead of or in addition to the beam forming, the NCR-Fwd 510A may perform null forming (so-called null steering) toward the UE 100 which is not a communication partner (not illustrated) and/or a neighboring gNB 200 (not illustrated) to curb interference.

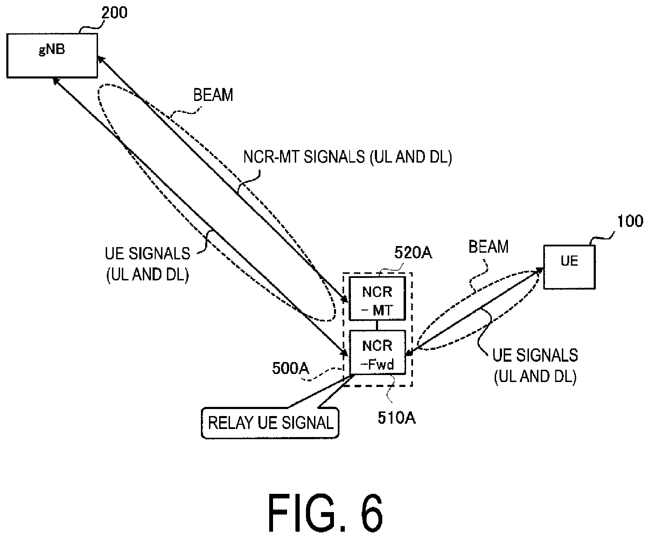

FIG. 6 is a diagram illustrating a control method for the NCR apparatus 500A according to the present embodiment. As illustrated in FIG. 6, the NCR-Fwd 510A relays a radio signal (referred to as a "UE signal") between the gNB 200 and the UE 100. The UE signal includes an uplink signal transmitted from the UE 100 to the gNB 200 (referred to as "UE-UL signal") and a downlink signal transmitted from the gNB 200 to the UE 100 (referred to as "UE-DL signal"). The NCR-Fwd 510A relays the UE-UL signal from the UE 100 to the gNB 200 and relays the UE-DL signal from the gNB 200 to the UE 100. The radio link between the NCR-Fwd 510A and the UE 100 is also referred to as an "access link". The radio link between the NCR-Fwd 510A and the gNB 200 is also referred to as a "backhaul link".

The NCR-MT 520A transmits and receives a radio signal (referred to herein as a "NCR-MT signal") to and from the gNB 200. The NCR-MT signal includes an uplink signal transmitted from the NCR-MT 520A to the gNB 200 (referred to as an "NCR-MT-UL signal"), and a downlink signal transmitted from the gNB 200 to the NCR-MT 520A (referred to as an "NCR-MT-DL signal"). The NCR-MT-UL signal includes signaling for controlling the NCR apparatus 500A. The radio link between the NCR-MT 520A and the gNB 200 is also referred to as a "control link".

The gNB 200 directs a beam to the NCR-MT 520A, based on the NCR-MT-UL signal from the NCR-MT 520A. Since the NCR apparatus 500A and the NCR-MT 520A are co-located, the beam is also eventually directed to the NCR-Fwd 510A when the backhaul link and the control link have the same frequency and the gNB 200 directs a beam to the NCR-MT 520A. The gNB 200 transmits the NCR-MT-DL signal and the UE-DL signal using the beam. The NCR-MT 520A receives the NCR-MT-DL signal. When the NCR-Fwd 510A and the NCR-MT 520A are at least partially integrated, a function (for example, antennas) for transmitting or receiving, or relaying UE signals and/or NCR-MT signals may be integrated in the NCR-Fwd 510A and the NCR-MT 520A. The beam includes a transmission beam and/or a reception beam. The beam is a general term for transmission and/or reception under control for maximizing power of a transmission wave and/or a reception wave in a specific direction by adjusting/adapting an antenna weight or the like.

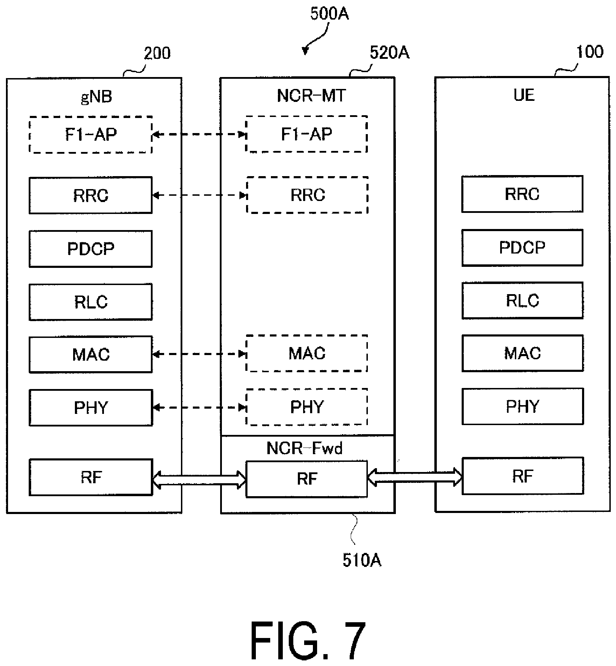

FIG. 7 is a diagram illustrating a configuration example of a protocol stack in the mobile communication system 1 including the NCR apparatus 500A according to the present embodiment. The NCR-Fwd 510A relays a radio signal transmitted and received between the gNB 200 and the UE 100. The NCR-Fwd 510A has a Radio Frequency (RF) function of amplifying and relaying a received radio signal, and performs directional transmission through beamforming (for example, analog beamforming).

The NCR-MT 520A includes at least one layer (entity) selected from the group consisting of PHY, MAC, RRC, and F1-Application Protocol (AP). The F1-AP is a type of a fronthaul interface. The NCR-MT 520A communicates downlink signaling and/or uplink signaling, which will be described below, with the gNB 200 through at least one selected from the group consisting of the PHY, the MAC, the RRC, and the F1-AP. When the NCR-MT 520A is a type or a part of the base station, the NCR-MT 520A may communicate with the gNB 200 through an AP of Xn (Xn-AP) which is an inter-base station interface.

### (1.3) Configuration Example of Relay Apparatus

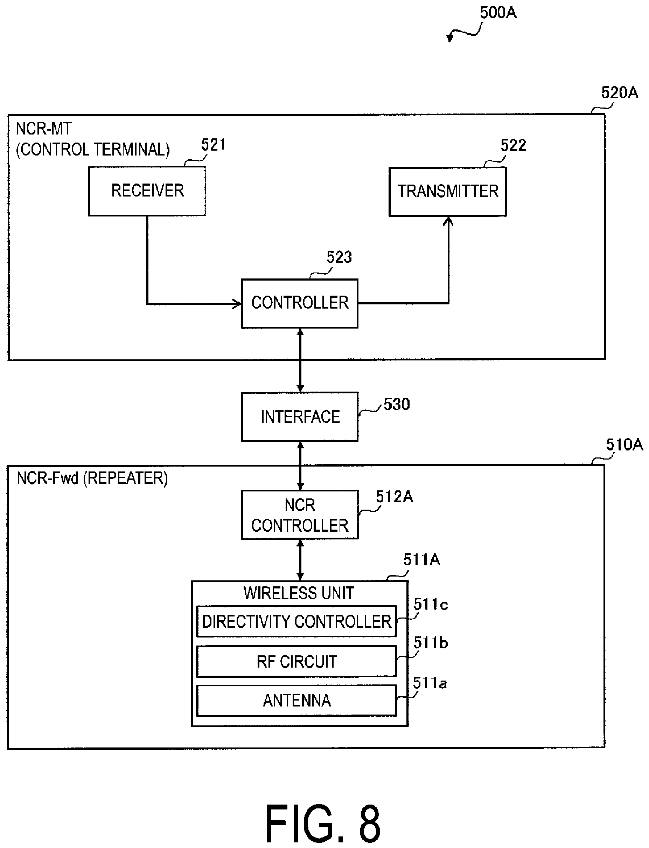

FIG. 8 is a diagram illustrating a configuration example of the NCR apparatus 500A that is the relay apparatus according to the present embodiment. The NCR apparatus 500A includes an NCR-Fwd 510A, an NCR-MT 520A, and an interface 530.

The NCR-Fwd 510A includes the wireless unit 511A and an NCR controller 512A. The wireless unit 511A includes an antenna 511a including a plurality of antennas (a plurality of antenna elements), an RF circuit 511b including an amplifier, and a directivity controller 511c that controls directivity of the antenna 511a. The RF circuit 511b amplifies and relays (transmits) radio signals transmitted and received by the antenna 511a. The RF circuit 511b may convert a radio signal, which is an analog signal, into a digital signal, and reconvert the digital signal into an analog signal after digital signal processing. The directivity controller 511c may perform analog beamforming through analog signal processing. The directivity controller 511c may perform digital beamforming through digital signal processing. The directivity controller 511c may perform analog and digital hybrid beamforming. The NCR controller 512A controls the wireless unit 511A in response to a control signal from the NCR-MT 520A. The NCR controller 512A may include at least one processor. The NCR controller 512A may output information on a capability of the NCR apparatus 500A to the NCR-MT 520A.

The NCR-MT 520A includes a receiver 521, a transmitter 522, and a controller 523. The receiver 521 performs various types of reception under control of the controller 523. The receiver 521 includes an antenna and a reception device. The reception device converts a radio signal received by the antenna (radio signal) into a baseband signal (a reception signal) and outputs the reception signal to the controller 523. The transmitter 522 performs various types of transmission under control of the controller 523. The transmitter 522 includes an antenna and a transmission device. The transmission device converts a baseband signal (a transmission signal) output by the controller 523 into a radio signal and transmits the radio signal from the antenna. The controller 523 performs various types of controls in the NCR-MT 520A. The controller 523 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. The controller 523 executes a function of layer of at least one selected from the group consisting of the PHY, the MAC, the RRC, and the F1-AP.

The interface 530 electrically connects the NCR-Fwd 510A to the NCR-MT 520A. The controller 523 of the NCR-MT 520A controls the NCR-Fwd 510A via the interface 530.

In the present embodiment, the receiver 521 of the NCR-MT 520A receives signaling (downlink signaling) used to control the NCR apparatus 500A from the gNB 200 through wireless communication. The controller 523 of the NCR-MT 520A controls the NCR apparatus 500A based on the signaling. This enables the gNB 200 to control the NCR-Fwd 510A via the NCR-MT 520A.

In the present embodiment, the controller 523 of the NCR-MT 520A may transmit the NCR capability information indicating the capability of the NCR apparatus 500A to the gNB 200 through wireless communication. The NCR capability information is an example of the uplink signaling from the NCR-MT 520A to the gNB 200. This enables the gNB 200 to ascertain the capability of the NCR apparatus 500A.

### (1.4) Configuration Example of Base Station

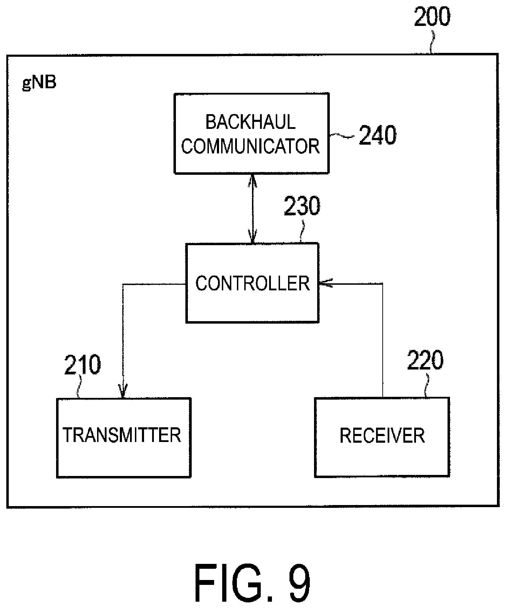

FIG. 9 is a diagram illustrating a configuration example of the gNB 200 according to the present embodiment. The gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230. The transmitter 210 and the receiver 220 may be capable of beamforming using a plurality of antennas.

The controller 230 performs various types of control for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. The gNB may include a Central Unit (CU) and a Distributed Unit (DU) (that is, functions are divided), and both units may be connected via an F1 interface.

In the present embodiment, the transmitter 210 of the gNB 200 transmits signaling (downlink signaling) used for control of the NCR-Fwd 510A to the NCR-MT 520A through wireless communication. This enables the gNB 200 to control the NCR apparatus 500A via the NCR-MT 520A. In the present embodiment, the receiver 220 of the gNB 200 may receive the NCR capability information indicating the capability of the NCR apparatus 500A from the NCR-MT 520A through wireless communication.

### (1.5) One Example of Downlink Signaling

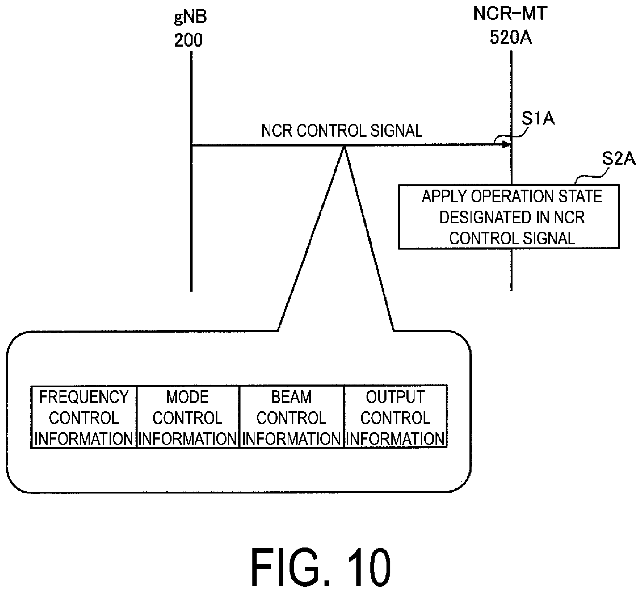

FIG. 10 is a diagram illustrating an example of downlink signaling from the gNB 200 to the NCR-MT 520A according to the present embodiment.

The gNB 200 (transmitter 210) transmits downlink signaling to the NCR-MT 520A. The downlink signaling may be an RRC message that is RRC layer (that is, layer-3) signaling. The downlink signaling may be a MAC Control Element (CE) that is MAC layer (that is, layer-2) signaling. The downlink signaling may be downlink control information (DCI) that is PHY layer (that is, layer-1) signaling. The downlink signaling may be UE-specific signaling. The downlink signaling may be broadcast signaling. The downlink signaling may be a fronthaul message (for example, F1-AP message). When the NCR-MT 520A is a type or a part of the base station, the NCR-MT 520A may communicate with the gNB 200 through an AP of Xn (Xn-AP) which is an inter-base station interface.

For example, the gNB 200 (transmitter 210) transmits an NCR control signal for designating an operation state of the NCR apparatus 500A as the downlink signaling to the NCR-MT 520A having established a wireless connection to the gNB 200 (step S1A). The NCR control signal for designating the operation state of the NCR apparatus 500A may be a MAC CE that is signaling of the MAC layer (layer-2) or a DCI that is signaling of the PHY layer (layer-1). However, the NCR control signal may be included in an RRC reconfiguration message that is a type of a UE-specific RRC message to transmit to the NCR-MT 520A. The downlink signaling may be a message of a layer (for example, an NCR application) higher than the RRC layer. The downlink signaling may be transmitting a message of a layer higher than the RRC layer encapsulated with a message of a layer equal to or lower than the RRC layer. The NCR-MT 520A (transmitter 522) may transmit a response message with respect to the downlink signaling from the gNB 200 in the uplink. The response message may be transmitted in response to the NCR apparatus 500A completing the configuration designated in the downlink signaling or receiving the configuration. The NCR control signal may be referred to as Side Control Information.

The NCR control signal may include frequency control information for designating a center frequency of a radio signal (for example, a component carrier) to be relayed by the NCR-Fwd 510A. When the NCR control signal received from the gNB 200 includes the frequency control information, the NCR-MT 520A (controller 523) controls the NCR-Fwd 510A such that the NCR-Fwd 510A relays a radio signal whose center frequency is indicated by the frequency control information as a target (step S2A). The NCR control signal may include a plurality of pieces of frequency control information for designating center frequencies different from each other. Since the NCR control signal includes the frequency control information, the gNB 200 can designate the center frequency of the radio signal to be relayed by the NCR-Fwd 510A via the NCR-MT 520A.

The NCR control signal may include mode control information for designating an operation mode of the NCR-Fwd 510A. The mode control information may be associated with the frequency control information (center frequency). The operation mode may be any one of a mode in which the NCR-Fwd 510A performs non-directional transmission and/or reception, a mode in which the NCR-Fwd 510A performs fixed-directional transmission and/or reception, a mode in which the NCR-Fwd 510A performs transmission and/or reception with a variable directional beam, and a mode in which the NCR-Fwd 510A performs Multiple Input Multiple Output (MIMO) relay transmission. The operation mode may be either a beamforming mode (that is, a mode in which improvement of a desired wave is emphasized) and a null steering mode (that is, a mode in which curbing of an interference wave is emphasized). When the NCR control signal received from the gNB 200 includes the mode control information, the NCR-MT 520A (controller 523) controls the NCR-Fwd 510A such that the NCR-Fwd 510A operates in the operation mode indicated by the mode control information (step S2A). Since the NCR control signal includes the mode control information, the gNB 200 can designate the operation mode of the NCR-Fwd 510A via the NCR-MT 520A.

Here, a mode in which the NCR apparatus 500A performs non-directional transmission and/or reception is a mode in which the NCR-Fwd 510A performs relay in all directions and may be referred to as an omnidirectional mode. The mode in which the NCR-Fwd 510A performs fixed-directional transmission and/or reception may be a directivity mode realized by one directional antenna. The mode may be a beamforming mode realized by applying fixed phase and amplitude control (antenna weight control) to a plurality of antennas. Any of these modes may be designated (configured) from the gNB 200 to the NCR-MT 520A. The mode in which the NCR-Fwd 510A performs transmission and/or reception with a variable directional beam may be a mode for performing analog beamforming. The mode may be a mode in which digital beamforming is performed. The mode may be a mode in which hybrid beamforming is performed. The mode may be a mode for forming an adaptive beam specific to the UE 100. Any of these modes may be designated (configured) from the gNB 200 to the NCR-MT 520A. In the operation mode in which beamforming is performed, beam control information to be described below may be provided from the gNB 200 to the NCR-MT 520A. The mode in which the NCR apparatus 500A performs MIMO relay transmission may be a mode for performing single-user (SU) spatial multiplexing. The mode may be a mode for performing multi-user (MU) spatial multiplexing. The mode may be a mode for performing transmission diversity. Any of these modes may be designated (configured) from the gNB 200 to the NCR-MT 520A. The operation mode may include a mode in which relay transmission by the NCR-Fwd 510A is turned on (activated) and a mode in which the relay transmission by the NCR-Fwd 510A is turned off (deactivated). Any of these modes may be designated (configured) from the gNB 200 to the NCR-MT 520A in the NCR control signal.

The NCR control signal may include beam control information for designating a transmission direction, a transmission weight, or a beam pattern for the NCR-Fwd 510A to perform directional transmission. The beam control information may be associated with the frequency control information (center frequency). The beam control information may include a precoding matrix indicator (PMI). The beam control information may include beam forming angle information. When the NCR control signal received from the gNB 200 includes the beam control information, the NCR-MT 520A (controller 523) controls the NCR-Fwd 510A such that the NCR-Fwd 510A forms a transmission directivity (beam) indicated by the beam control information (step S2A). Since the NCR control signal includes the beam control information, the gNB 200 can control the transmission directivity of the NCR apparatus 500A via the NCR-MT 520A.

The NCR control signal may include output control information for designating a degree at which the NCR-Fwd 510A amplifies a radio signal (amplification gain), or transmission power. The output control information may be information indicating a difference value (that is, a relative value) between a current amplification gain or transmission power and a target amplification gain or transmission power. When the NCR control signal received from the gNB 200 includes the output control information, NCR-MT 520A (controller 523) controls the NCR-Fwd 510A such that the amplification gain or transmission power is changed to an amplification gain or transmission power indicated by the output control information (step S2A). The output control information may be associated with the frequency control information (center frequency). The output control information may be information for designating any one of an amplification gain, a beamforming gain, and an antenna gain of the NCR-Fwd 510A. The output control information may be information for designating transmission power of the NCR-Fwd 510A.

When one NCR-MT 520A controls a plurality of NCR-Fwds 510A, the gNB 200 (transmitter 210) may transmit the NCR control signal to the NCR-MT 520A for each NCR-Fwd 510A. In this case, the NCR control signal may include an identifier of the corresponding NCR-Fwd 510A (NCR identifier). The NCR-MT 520A (controller 523) controlling the plurality of NCR-Fwds 510A determines the NCR-Fwd 510A to which the NCR control signal is applied, based on the NCR identifier included in the NCR control signal received from the gNB 200. The NCR identifier may be transmitted together with the NCR control signal from the NCR-MT 520A to the gNB 200 even when the NCR-MT 520A controls only one NCR-Fwd 510A.

Thus, the NCR-MT 520A (controller 523) controls the NCR-Fwd 510A based on the NCR control signal from the gNB 200. This enables the gNB 200 to control the NCR-Fwd 510A via the NCR-MT 520A.

### (1.6) Example of Uplink Signaling

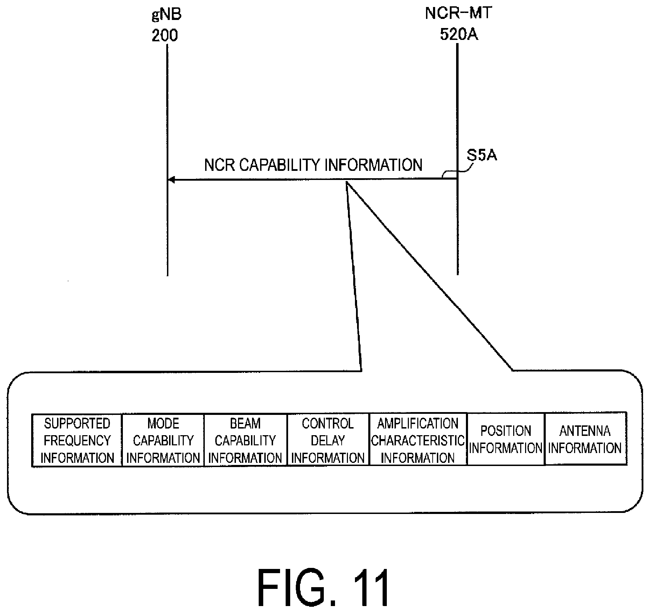

FIG. 11 is a diagram illustrating an example of uplink signaling from the NCR-MT 520A to the gNB 200 according to the present embodiment.

The NCR-MT 520A (transmitter 210) transmits uplink signaling to the gNB 200. The uplink signaling may be an RRC message that is RRC layer signaling. The uplink signaling may be a MAC CE that is MAC layer signaling. The uplink signaling may be uplink control information (UCI) that is PHY layer signaling. The uplink signaling may be a fronthaul message (for example, F1-AP message). The uplink signaling may be an inter-base station message (for example, Xn-AP message). The uplink signaling may be a message of a layer (for example, an NCR application) higher than the RRC layer. The uplink signaling may be transmitting a message of a layer higher than the RRC layer encapsulated with a message of a layer equal to or lower than the RRC layer. That is, the uplink signaling stores a higher layer message in a lower layer container. The gNB 200 (transmitter 210) may transmit a response message with respect to the uplink signaling from the NCR-MT 520A in the downlink, and the NCR-MT 520A (receiver 521) may receive the response message.

For example, the NCR-MT 520A (transmitter 522) having established a wireless connection to the gNB 200 transmits the NCR capability information indicating the capability of the NCR apparatus 500A to the gNB 200 as the uplink signaling (step S5A). The NCR-MT 520A (transmitter 522) may include the NCR capability information in a UE Capability message or a UE Assistant Information message that is a type of the RRC message, and transmit the message to the gNB 200. The NCR-MT 520A (transmitter 522) may transmit the NCR capability information (NCR capability information and/or operation state information) to the gNB 200 in response to a request or inquiry from the gNB 200.

The NCR capability information may include supported frequency information indicating a frequency supported by the NCR-Fwd 510A. The NCR capability information may include mode capability information on the operation modes or switching between the operation modes that can be supported by the NCR-Fwd 510A. The NCR capability information may include the beam capability information indicating a beam variable range, a beam variable resolution, or the number of variable patterns when the NCR-Fwd 510A performs transmission and/or reception with a variable directional beam. The NCR capability information may include control delay information indicating a control delay time in the NCR apparatus 500A. The NCR capability information may include amplification characteristic information on radio signal amplification characteristics or output power characteristics in the NCR-Fwd 510A. The NCR capability information may include position information indicating an installation position of the NCR apparatus 500A. The NCR capability information may include antenna information indicating the number of antennas included in the NCR-Fwd 510A. When the NCR-MT 520A controls a plurality of NCR-Fwds 510A, the NCR-MT 520A (transmitter 522) may transmit the NCR capability information for each NCR-Fwd 510A to the gNB 200.

### (1.7) One Example of Overall Operation Sequence

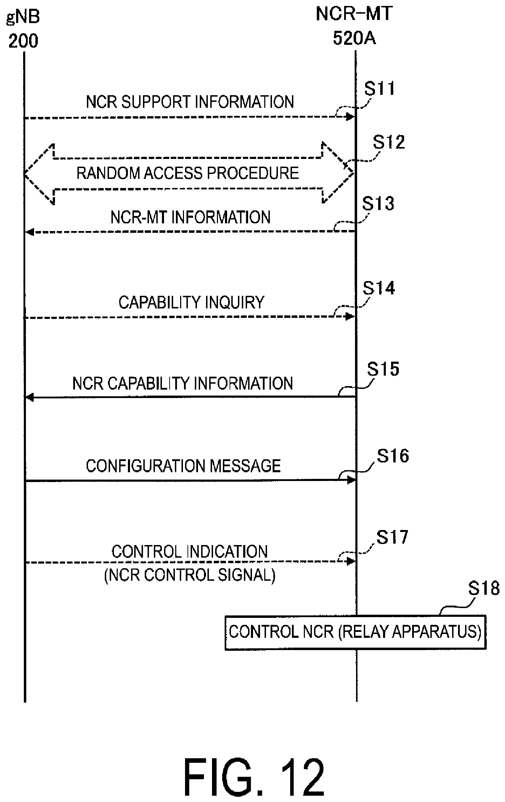

FIG. 12 is a diagram illustrating an example of an overall operation sequence of the mobile communication system 1 according to the present embodiment. In a sequence diagram referred to in the following embodiments, non-essential steps are indicated by dashed lines. Although description will be made in detail, "NCR" in FIG. 12 may be interpreted as "RIS".

In step S11, the gNB 200 (transmitter 210) broadcasts NCR support information indicating that the gNB 200 supports the NCR-MT 520A. For example, the gNB 200 (transmitter 210) broadcasts a system information block (SIB) including the NCR support information. The NCR support information may be information indicating that the NCR-MT 520A is accessible. The gNB 200 (transmitter 210) may broadcast NCR non-support information indicating that the gNB 200 does not support the NCR-MT 520A. The NCR non-support information may be information indicating that the NCR-MT 520A is inaccessible.

In this stage, the NCR-MT 520A may be in the RRC idle state or RRC inactive state. The NCR-MT 520A (controller 523) having not established a wireless connection to the gNB 200 may determine that access to the gNB 200 is allowed in response to reception of the NCR support information from the gNB 200, and perform an access operation for establishing a wireless connection to the gNB 200. The NCR-MT 520A (controller 523) may regard the gNB 200 (cell) to which access is allowed as the highest priority and perform cell reselection.

On the other hand, when the gNB 200 does not broadcast the NCR support information (or when the gNB 200 broadcasts the NCR non-support information), the NCR-MT 520A (controller 523) having not established a wireless connection to the gNB 200 may determine that access (connection establishment) to the gNB 200 is not possible. This enables the NCR-MT 520A to establish a wireless connection only to the gNB 200 capable of handling the NCR-MT 520A.

When the gNB 200 is congested, the gNB 200 may broadcast access restriction information for restricting an access from the UE 100. However, the NCR-MT 520A can be considered to be a network-side entity, unlike a normal UE 100. Therefore, the NCR-MT 520A may ignore the access restriction information from the gNB 200. For example, when the NCR-MT 520A (controller 523) receives the NCR support information from the gNB 200, the NCR-MT 520A (controller 523) may perform an operation for establishing a wireless connection to the gNB 200 even when the gNB 200 broadcasts the access restriction information. For example, the NCR-MT 520A (controller 523) need not execute (or may ignore) unified access control (UAC). Alternatively, any one or both of access category/access identity (AC/AI) used in the UAC may be a special value indicating that the access is made by the NCR-MT.

In step S12, the NCR-MT 520A (controller 523) starts a random access procedure for the gNB 200. In the random access procedure, the NCR-MT 520A (transmitter 522) transmits a random access preamble (Msg1) and an RRC message (Msg3) to the gNB 200. In the random access procedure, the NCR-MT 520A (receiver 521) receives a random access response (Msg2) and an RRC message (Msg4) from the gNB 200.

In step S13, when the NCR-MT 520A (transmitter 522) establishes the wireless connection to the gNB 200, the NCR-MT 520A may transmit to the gNB 200 NCR-MT information indicating that the own UE itself is an NCR-MT. For example, the NCR-MT 520A (transmitter 522) includes the NCR-MT information in the message (for example, Msg1, Msg3, or Msg5) for a random access procedure to transmit the message to the gNB 200 during the random access procedure with the gNB 200. The gNB 200 (controller 230) can recognize that the accessing UE 100 is the NCR-MT 520A, based on the NCR-MT information received from the NCR-MT 520A, and exclude, for example, the NCR-MT 520A from the access restriction target (in other words, accept the access). When the random access procedure is completed, the NCR-MT 520A transitions from the RRC idle state or the RRC inactive state to the RRC connected state.

In step S14, the gNB 200 (transmitter 522) transmits a capability inquiry message for inquiring the capability of the NCR-MT 520A to the NCR-MT 520A. The NCR-MT 520A (receiver 521) receives the capability inquiry message.

In step S15, the NCR-MT 520A (transmitter 522) transmits a capability information message including the NCR capability information to the gNB 200. The capability information message may be an RRC message, for example, a UE Capability message. The gNB 200 (receiver 220) receives the capability information message. The gNB 200 (controller 230) ascertains the capability of the NCR apparatus 500A based on the received capability information message.

In step S16, the gNB 200 (transmitter 522) transmits a configuration message including various configurations regarding the NCR apparatus 500A to the NCR-MT 520A. The NCR-MT 520A (receiver 521) receives the configuration message. The configuration message is a type of the above-described downlink signaling. The configuration message may be an RRC message, for example an RRC reconfiguration message.

In step S17, the gNB 200 (transmitter 522) transmits the control indication for designating the operation state of the NCR-Fwd 510A to the NCR-MT 520A. The control indication may be the NCR control signal (for example, L1/L2 signaling) described above. The NCR-MT 520A (receiver 521) receives the control indication. The NCR-MT 520A (controller 523) controls the NCR-Fwd 510A in response to a control indication.

In step S18, the NCR-MT 520A controls the NCR apparatus 500A according to the configuration (and control indication). The NCR-MT 520A may autonomously control the NCR apparatus 500A without depending on the control indication from the gNB 200. For example, the NCR-MT 520A may autonomously control the NCR apparatus 500A based on a position of the UE 100 and/or information received from the UE 100 by the NCR-MT 520A.

### (1.8) Beam Sweeping

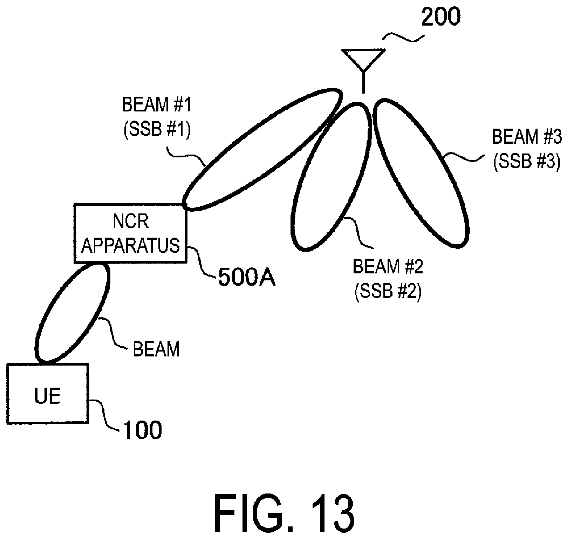

FIG. 13 is a diagram illustrating beam sweeping according to the embodiment.

The gNB 200 performs beam sweeping in which transmission is performed while sequentially switching beams in different directions. In this case, the gNB 200 transmits a different SSB for each beam. The SSB is periodically transmitted from the gNB 200 to the cell as an SSB burst including a plurality of SSBs. An SSB index, which is an identifier, is assigned to each of a plurality of SSBs in one SSB burst. The SSBs are beamformed in different directions and transmitted. The NCR apparatus 500A (NCR-MT 520A) reports in which direction the beam had a good reception quality to the gNB 200 during a random access channel (RACH) procedure. Specifically, the NCR apparatus 500A (NCR-MT 520A) transmits a random access preamble to the gNB 200 at a random access channel (RACH) occasion associated with the SSB index of which the beam had a good reception quality. As a result, the gNB 200 can ascertain the optimum beam for the NCR apparatus 500A (NCR-MT 520A).

Such an SSB may be transmitted in an initial BWP (initial DL BWP). When the NCR apparatus 500A (NCR-MT 520A) is in the RRC connected state, a dedicated BWP may be configured and activated for the NCR apparatus 500A (NCR-MT 520A). In the dedicated BWP, a channel state information reference signal (CSI-RS) may be used as a reference signal instead of the SSB. Hereinafter, an example in which beam information for identifying a beam is an SSB index on the assumption that a beam and an SSB (specifically, an SSB index) have a one to one relationship will be mainly described. However, the beam may be associated with the CSI-RS. The beam information for identifying a beam may be a CSI-RS index.

### (1.9) Operation Relating to Load Balancing

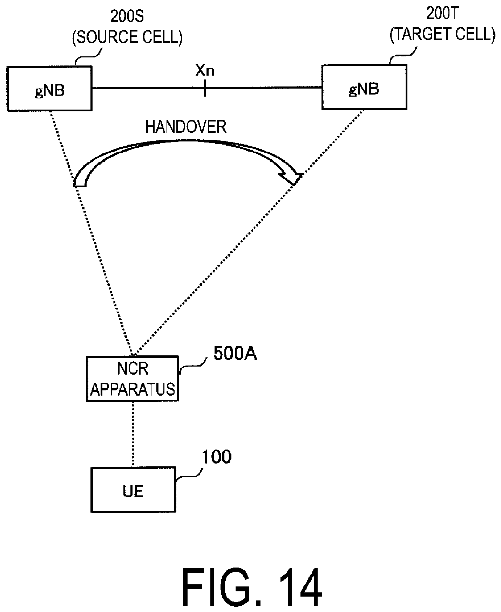

FIG. 14 is a diagram illustrating an operation relating to load balancing according to the present embodiment.

The NCR apparatus 500A extends the coverage of the cell of a gNB 200S by relaying radio signals between the gNB 200S and the UE 100. In the illustrated example, the number of UEs 100 connected with the gNB 200S via the NCR apparatus 500A is one, but a plurality of the UEs 100 may be present.

When the coverage is extended by the NCR apparatus 500A, the cell of the gNB 200S needs to accommodate a larger number of UEs. Therefore, the load of the cell of the gNB 200S increases, and an overload is most likely to occur.

Here, the load of the cell of the gNB 200S can be balanced with the cell of the gNB 200T by handing over the NCR apparatus 500A from the cell (source cell) of the gNB 200S to the cell (target cell) of a gNB 200T that is a neighboring base station. A scenario in which the NCR apparatus 500A is handed over for the purpose of load balancing is mainly assumed below. While not being limited to the handover of the NCR apparatus 500A for the purpose of load balancing, the handover may be performed for the purpose of improvement of a radio condition of the NCR apparatus 500A or the like. Hereinafter, the gNB 200S will be also referred to as the source gNB (source base station) 200S, and the gNB 200T will be also referred to as the target gNB (target base station) 200S.

In the present embodiment, the gNB 200S corresponding to a source cell (first cell) transmits a message for connecting the NCR apparatus 500A to a target cell (second cell) to the gNB 200T corresponding to the target cell on the Xn interface (inter-base station interface). The message contains information relating to the NCR apparatus 500A. Thus, the NCR apparatus 500A can be appropriately handed over. Here, the gNB 200S is an example of a first network node, and the gNB 200T is an example of a second network node. The Xn interface is an example of a network interface.

In the following description of the present embodiment, an example in which inter-base station handover of the NCR apparatus 500A, more specifically, inter-CU handover is performed will be mainly described. In this regard, the present embodiment is not limited to the inter-base station handover and may be intra-base station handover (Intra-CU handover). In a case of intra-base station handover, the first network node may be a CU or a source DU, the second network node may be a target DU, and the network interface may be an F1 interface.

Although a handover operation will be mainly described in the present embodiment, the present embodiment may be applied to a dual connectivity (DC) operation in which the NCR apparatus 500A performs simultaneous communication with the gNB 200S and the gNB 200T. In this case, the first network node may be the gNB 200S (master node) and the second network node may be the gNB 200T (secondary node), and the network interface may be the F1 interface and the message may be a secondary node addition request message.

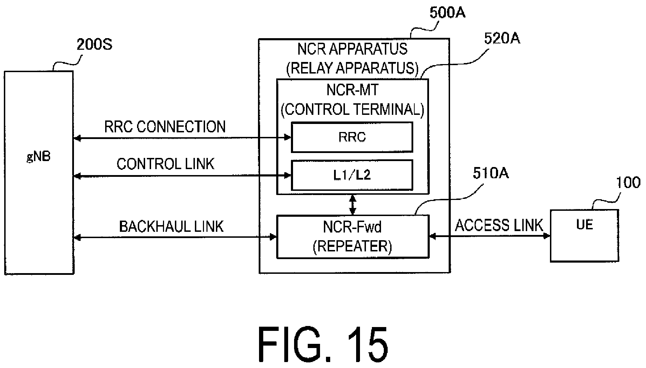

FIG. 15 is a diagram illustrating a link (connection) between the NCR apparatus 500A and the gNB 200S according to the present embodiment.

A backhaul link is established between the gNB 200S and the NCR-Fwd 510A of the NCR apparatus 500A. An access link is established between the UE 100 and the NCR-Fwd 510A of the NCR apparatus 500A. The NCR apparatus 500A (NCR-Fwd 510A) that relays a radio signal transmitted between the gNB 200S and the UE 100 changes a propagation state of the radio signal without demodulating or modulating the radio signal.

A control link is established between the gNB 200S and a layer 1 and/or a layer 2 (L1/L2) of the NCR apparatus 500A (NCR-MT 520A). An RRC connection is established between the gNB 200S and the RRC of the NCR apparatus 500A (NCR-MT 520A). The RRC of the NCR apparatus 500A (NCR-MT 520A) transmits and receives RRC messages relating to handover to and from the gNB 200S via the RRC connection. The NCR apparatus 500A (NCR-MT 520A) switches the RRC connection from the source gNB 200S to the target gNB 200T by handover.

### (1.9.1) First operation pattern of load balancing

According to the present operation pattern, the source gNB 200S notifies the target gNB 200T of a handover request of the NCR apparatus 500A. The source gNB 200S may notify the target gNB 200T of load balancing handover. The source gNB 200S may notify the target gNB 200T of the number of the UEs 100 to be handed over subsequently to the NCR apparatus 500A. Such notification enables the target gNB 200T to appropriately determine whether to accept the handover request from the source gNB 200S.

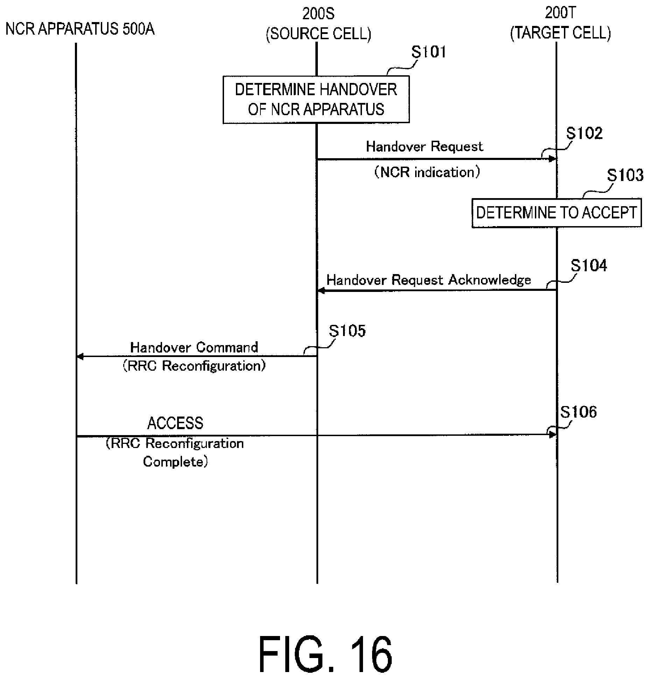

FIG. 16 is a diagram illustrating an operation example of the mobile communication system 1 according to the present operation pattern.

In step S101, the source gNB 200S determines the handover of the NCR apparatus 500A. Based on a measurement report message from the NCR apparatus 500A (NCR-MT 520A), the source gNB 200S may determine the handover of the NCR apparatus 500A in response to discovery of a cell having better radio quality. The source gNB 200S may determine to handover the NCR apparatus 500A in response to an increase in load and need of load balancing.

In step S102, the source gNB 200S transmits to the target gNB 200T over the Xn interface a handover request message for requesting handover of the NCR apparatus 500A from the source cell of the source gNB 200S to the target cell of the target gNB 200T. The target gNB 200T receives the handover request message. The handover request message includes at least one selected from the group consisting of pieces of following information (a1) to (c1).

### (a1) Information indicating handover of the NCR apparatus 500A (that is, NCR indication):

This information is flag information indicating that a handover target is the NCR apparatus 500A. This allows the target gNB 200T to perform control such that handover of the NCR apparatus 500A is accepted preferentially over handover of the UE 100. The flag information is defined separately from information indicating that the handover target is an Integrated Access and Backhaul (IAB) node. As described below, when the relay apparatus is an RIS apparatus, the flag information may be information indicating that the handover target is the RIS apparatus. The flag information may be information indicating that a target NCR apparatus or RIS apparatus has been authenticated.

### (b1) Information indicating that the NCR apparatus 500A is handed over to balance the load of the source gNB 200S (source cell) with the target gNB 200T (target cell):

When the purpose of handover is load balancing, the source gNB 200S includes, in the handover request, information indicating load balancing associated with the NCR apparatus 500A. Thus, the target gNB 200T can determine whether to accept the handover taking the purpose of the handover into account. When the purpose of the handover is due to the movement of the NCR apparatus or the RIS apparatus, the information (b1) may be information indicating the movement of the apparatus or information indicating that the apparatus has movement capability (is of a mobile type).

### (c1) Information indicating the number of the UEs 100 to be handed over due to the handover of the NCR apparatus 500A:

The information indicates, for example, the number of the UEs 100 connected with the source gNB 200S via the NCR apparatus 500A. The source gNB 200S may specify the number of the UEs 100 that are communicating with the NCR apparatus 500A by using the same SSB as that of the NCR apparatus 500A as the number of the UEs 100 to be handed over due to the handover of the NCR apparatus 500A. The information may be information on a throughput (and/or the amount of radio resources) required to accommodate the UE 100.

In step S103, the target gNB 200T determines whether the handover request in step S102 can be accepted. That is, the target gNB 200T having received the handover request message determines whether to permit the handover of the NCR apparatus 500A based on the information included in the handover request message. The target gNB 200T may determine to accept the handover request when the target gNB 200T itself has capability to control the NCR apparatus 500A and/or when the target gNB 200T can keep a load of itself at a certain level or less even when the NCR apparatus 500A and the UE 100 are handed over to target gNB 200T. Here, the description continues on the assumption that the target gNB 200T accepts (permits) the handover request.

In step S104, the target gNB 200T transmits to the source gNB 200S over the Xn interface a handover request acknowledge message that is a response message indicating that handover is allowed. The source gNB 200S receives the handover request acknowledge message. The target gNB 200T may include in the handover request acknowledge message an indication as to whether the NCR apparatus 500A (NCR-MT 520A) also continues to operate under control of the source gNB 200S during handover. The indication may be an indication as to whether to continue the operation under current control after the handover.

In step S105, the source gNB 200S transmits an RRC reconfiguration message including the information in the handover request acknowledge message, that is, a handover command indicating handover to the target gNB 200T (target cell) to the NCR apparatus 500A (NCR-MT 520A). The NCR apparatus 500A (NCR-MT 520A) receives the handover command. The handover command may include the indication included in the handover request acknowledge message in step S104.

In step S106, the NCR apparatus 500A (NCR-MT 520A) starts accessing the target gNB 200T (target cell) designated by the handover command in response to reception of the handover command in step S105. The NCR apparatus 500A (NCR-MT 520A) may transmit the RRC Reconfiguration Complete message to the target gNB 200T (target cell) at the time of the access. The NCR apparatus 500A (NCR-MT 520A) may also continue to control the NCR apparatus 500A (NCR-Fwd 510A) during the handover according to the indication included in the handover command.

### (1.9.2) Second Operation Pattern of Load Balancing

As described above, when control of the NCR apparatus 500A is transferred to another cell (target cell) by handover, it is desirable that the other cell can more quickly and accurately control the NCR apparatus 500A after the handover. In the present operation pattern, the source gNB 200S notifies the target gNB 200T of control information and/or context information of the NCR apparatus 500A. That is, in the second operation pattern, the handover request message includes control information used to control the NCR apparatus 500A and/or context information of the NCR apparatus 500A. Thus, the target gNB 200T can more quickly and accurately control the NCR apparatus 500A after handover. The present operation pattern may be performed in combination with the first operation pattern described above.

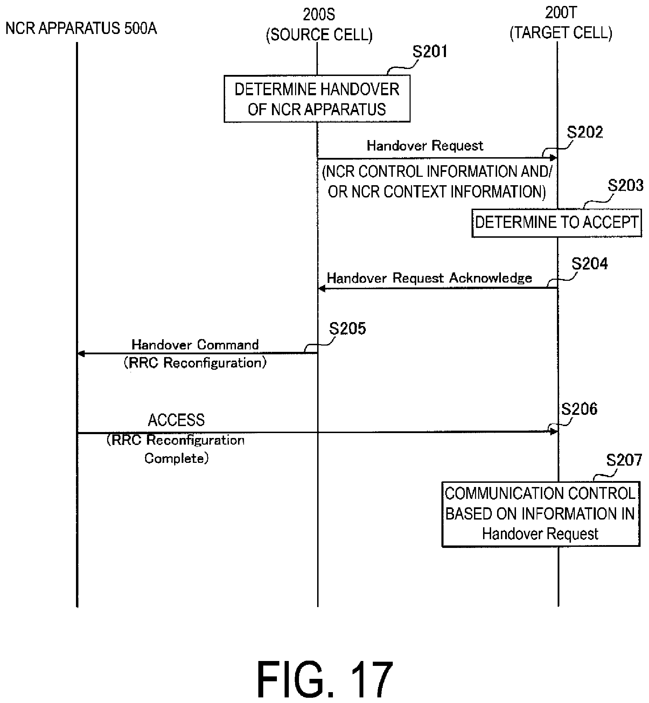

FIG. 17 is a diagram illustrating an operation example of the mobile communication system 1 according to the present operation pattern. Redundant description of operations that overlap the operations of the first operation pattern described above will be omitted.

In step S201, the source gNB 200S determines handover of the NCR apparatus 500A.

In step S202, the source gNB 200S transmits to the target gNB 200T over the Xn interface a handover request message for requesting handover of the NCR apparatus 500A from the source cell of the source gNB 200S to the target cell of the target gNB 200T. The target gNB 200T receives the handover request message. The handover request message includes at least one selected from the group consisting of pieces of following information (a2) to (c2).

### (a2) Control information (beam information) indicating a beam to be applied to the NCR apparatus 500A:

The control information may include an SSB index applied to the NCR apparatus 500A by itself. In this case, the target gNB 200T may estimate an optimal beam to be applied to the NCR apparatus 500A by itself from, for example, the SSB index and the measurement report message of the UE 100 currently served by the target gNB 200T. The control information may include an SSB index that the target cell needs to apply. The source gNB 200S may specify the SSB index from, for example, the measurement report message of the NCR apparatus 500A (NCR-MT 520A).

### (b2) Control information for controlling the operation of the NCR apparatus 500A:

The control information includes NCR control information corresponding to the NCR control signal described above, the NCR control information including at least one selected from the group consisting of a weight, an (output) beam angle, and a transmission output (gain) applied by the source gNB 200S to the NCR apparatus 500A. The control information may include control time information that indicates a time (timing) at which the NCR control information is applied. For example, the target gNB 200T may estimate that many UEs 100 are present in the direction of the most frequently used beam control configuration, which may be referenced when the target gNB 200T itself controls the NCR apparatus 500A.

### (c2) Context information of the NCR apparatus 500A:

The context information includes, for example, information indicating that the operation of the NCR apparatus 500A has been authenticated from the network (a core network, a radio access network, and/or a network monitoring apparatus).

In step S203, the target gNB 200T determines whether the handover request in step S102 can be accepted. Here, the description continues on the assumption that the target gNB 200T accepts (permits) the handover request.

The operations in step S204 to step S206 are the same as those of the first operation pattern described above.

In step S207, after the NCR apparatus 500A connects to its cell (target cell), the target gNB 200T performs communication control for the NCR apparatus 500A based on the information included in the handover request message of step S202.

### (1.10) Connection Control of relay apparatus to Desired Cell

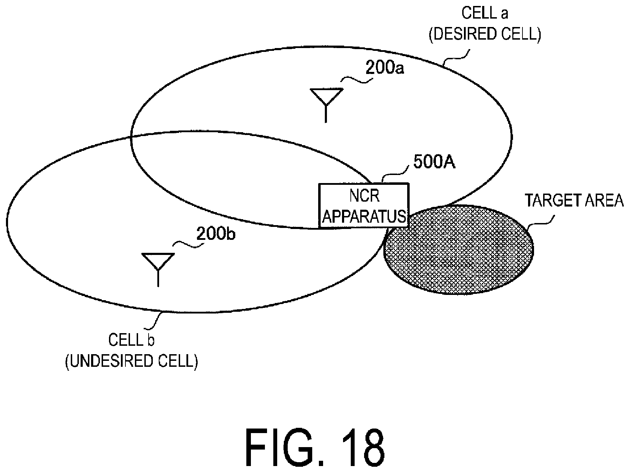

FIG. 18 is a diagram illustrating control of a connection of the NCR apparatus 500A to a desired cell.

The NCR apparatus 500A is assumed to be installed in order to extend the coverage area of the base station apparatus 200, and the NCR apparatus 500A is assumed to be installed based on station installation design. In this case, the cell serving as a connection destination of the NCR apparatus 500A is determined in advance. Hereinafter, this cell is also referred to as a "desired cell." That is, a cell to which the NCR apparatus 500A (Specifically, NCR-MT 520A) is connected for control is determined based on the station installation design. In the illustrated example, a cell a in the gNB 200a is the desired cell, and an adjacent cell b of the cell is a cell that is not the desired cell (also referred to as a "undesired cell"). Although an example in which the cell b is a cell in the gNB 200b is illustrated, the cell b may be a cell in the gNB 200a.

Which cell is to be configured as the desired cell depends on a policy of a network operator. For example, a cell satisfying at least one of the following conditions may be configured as the desired cell:
· A cell supporting the NCR apparatus 500A,
· A cell having a coverage hole (a dead zone) or a cell adjacent to the coverage hole
· A cell in which the number of accommodated UEs during a normal operation is small.

It is assumed that the NCR apparatus 500A is installed at a place such as a cell edge where a radio environment is not good (or complicated) for the purpose of coverage expansion. In the illustrated example, the NCR apparatus 500A is installed to perform coverage extension for target areas outside of the cell a and the cell b. Specifically, the NCR apparatus 500A is disposed in a region where the cell a and the cell b overlap, that is, in a cell edge region of each of the cell a and the cell b. In this example, since the cell a is the desired cell, it is assumed that the NCR apparatus 500A connects to the cell a to extend the coverage of the cell a.

Here, when the NCR-MT 520A of the NCR apparatus 500A is in the RRC idle state (or the RRC inactive state), the NCR-MT 520A may perform cell selection or cell reselection. In the cell selection, the NCR-MT 520A selects a cell satisfying a predetermined quality criterion (also referred to as a " suitable cell ") as a serving cell, for example at power-on. In the cell reselection, the NCR-MT 520A selects, for example, a cell with the best radio quality (also referred to as a " best cell ") as a new serving cell.

In such cell selection or cell reselection, since the NCR-MT 520A does not determine whether or not the candidate cell is a desired cell, the NCR-MT 520A may select (or reselects; the same applies hereinafter) an undesired cell. For example, the NCR-MT 520A may select a cell different from the desired cell through cell selection at the time of initial connection (for example, power on), at the time of RRC re-establishment, or in redirection. When a radio link failure (RLF) or an RRC release occurs after cell selection, the NCR-MT 520A can select an undesired cell that is the best cell through cell reselection. For example, when the radio quality (for example, RSRP) of the desired cell is poor, such selection of the undesired cell is likely to be performed.

When the NCR-MT 520A selects an undesired cell and connects to the undesired cell, the undesired cell is expected to move the NCR-MT 520A (NCR apparatus 500A) to the desired cell. For example, by transmitting a redirection indication to the NCR-MT 520A, the undesired cell causes the NCR-MT 520A to transition to the RRC idle state, causes the desired cell to be selected (camped), and causes the NCR-MT 520A to be connected to the desired cell. Alternatively, the undesired cell transmits a handover indication to the NCR-MT 520A to perform handover to the desired cell while keeping the NCR-MT 520A in the RRC connected state. The handover operation is the same as that described above. However, when the purpose of the handover is to move the NCR apparatus 500A to the desired cell, the source gNB may include information indicating that the purpose is the movement in the handover request. The target gNB may grant the handover request based on the information.

However, there exists a possibility in which the undesired cell does not know the desired cell of the NCR apparatus 500A (NCR-MT 520A). The network operator, specifically an Operation, Administration and Maintenance (OAM), could configure all of the gNBs 200, but such a task becomes difficult as the number of NCR apparatuses 500A increases. Therefore, in the following embodiment, a connection control mechanism that enables the NCR apparatus 500A to be connected to a desired cell automatically (or without any trouble) will be described.

Specifically, the NCR apparatus 500A that performs relay transmission for relaying a radio signal transmitted between the network 5 and the UE 100 connects to a cell selected through cell selection or cell reselection to perform relay transmission. In the connection control according to the present embodiment, cell information (also referred to as " desired cell information ") for specifying a desired cell determined to be a connection destination of the NCR apparatus 500A is communicated between the network 5 and the NCR apparatus 500A or between entities in the network 5. This allows an appropriate apparatus/entity, in the mobile communication system 1, to acquire the information of the desired cell, thus facilitating connection of the NCR apparatus 500A to the desired cell.

For example, the NCR apparatus 500A includes an NCR-Fwd 510A (repeater) that performs relay transmission for relaying a radio signal transmitted between the network 5 and the UE 100, and an NCR-MT 520A (control terminal) that connects to a cell selected through cell selection or cell reselection and controls relay transmission. The NCR-MT 520A communicates cell information for specifying a desired cell determined to be a connection destination of its own apparatus with the network 5.

A network apparatus (for example, gNB 200 or AMF 300A) provided in the network 5 includes a communicator (for example, the backhaul communicator 240) that communicates with the NCR apparatus 500A or another network apparatus (for example, gNB 200 or AMF 300A). The communicator communicates cell information for specifying a desired cell determined to be a connection destination of the NCR apparatus 500A with the NCR apparatus 500A or another network apparatus.

### (1.10.1) First operation pattern of connection control

In the present operation pattern, the NCR apparatus 500A (NCR-MT 520A) transmits cell information to the cell to which the NCR apparatus 500A is connected. This makes it easy for the gNB 200 managing the cell to specify the desired cell of the NCR apparatus 500A and move (and connect) the NCR apparatus 500A to the desired cell. For example, when connected to an undesired cell, the NCR apparatus 500A notifies the gNB 200 managing the undesired cell of the cell ID of the desired cell.

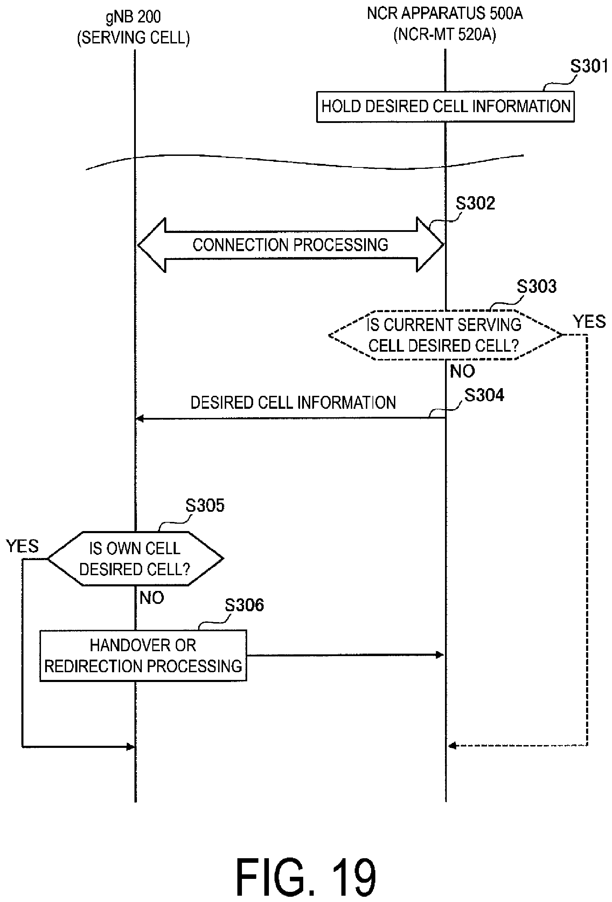

FIG. 19 is a diagram illustrating an operation example of the mobile communication system 1 according to the present operation pattern.

In step S301, NCR-MT 520A holds the desired cell information in advance. The NCR-MT 520A may be configured with the desired cell information through OAM in advance. A universal subscriber identity module card (USIM) of the NCR-MT 520A may be configured with the desired cell information in advance. The NCR-MT 520A may automatically recognize the desired cell and hold the desired cell information as in the second operation pattern to be described later.

The desired cell information includes at least one selected from the group consisting of a cell ID (desired cell ID), a gNB ID, and a frequency identifier (ARFCN: Absolute RadioFrequency Channel Number) for the desired cell. The cell ID may be an NR cell global identifier (NCGI) and/or a physical cell identifier (PCI) (the same applies hereinafter).

In step S302, the NCR-MT 520A connects to the current serving cell. The NCR-MT 520A may establish a connection from an RRC idle state (or an RRC inactive state). The NCR-MT 520A may be accessed and connected by handover. Here, the NCR-MT 520A may check the cell ID of the corresponding cell.

In step S303, the NCR-MT 520A may determine whether or not the current serving cell is the desired cell based on the held desired cell information. The process of step S304 to be described later may be executed when the determination result of step S303 is YES.

In step S304, the NCR-MT 520A transmits a message including information of the desired cell to the current serving cell. The message may be an existing RRC message such as a UE assistance information message. The message may be a newly defined message (e.g., an NCR-MT Information message).

In step S305, the gNB 200 may determine whether or not its own cell (serving cell of NCR-MT 520A) is the desired cell based on the desired cell information from the NCR-MT 520A.

When the own cell (serving cell of NCR-MT 520A) is not the desired cell (step S305: NO), gNB 200 performs handover or redirection processing to move the NCR apparatus 500A to the desired cell based on the desired cell information from the NCR-MT 520A in step S306. Specific examples of the redirection will be described later. NCR-MT 520A connects to the desired cell through handover or redirection to the desired cell.

### (1.10.2) Second Operation Pattern of Connection Control

In the present operation pattern, the NCR-MT 520A autonomously recognizes the desired cell. Specifically, when NCR-MT 520A (NCR apparatus 500A) receives configuration information (also called "NCR configuration") related to relay transmission from any cell in the network 5, NCR-MT 520A considers the cell transmitting the configuration information to be the desired cell. In other words, the NCR-MT 520A considers the cell that has last performed NCR configurations on itself to be the desired cell. Thus, according to the present operation pattern, the NCR-MT 520A can autonomously recognize the desired cell under the assumption that undesired cells do not perform NCR configurations for the NCR-MT 520A.

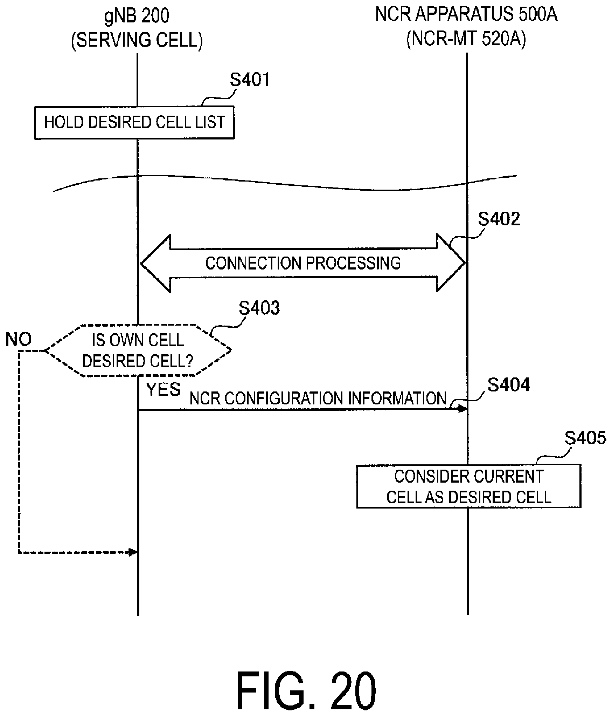

FIG. 20 is a diagram illustrating an operation example of the mobile communication system 1 according to the present operation pattern. Redundant description of operations that overlap the operations of the first operation pattern described above will be omitted.

In step S401, the gNB 200 holds a desired cell list indicating desired cell information of each NCR apparatus 500A (NCR-MT 520A). A desired cell list may be a list including IDs of NCR apparatuses 500A (NCR-MT 520A) whose desired cell is the own cell. The ID of the NCR apparatus 500A (NCR-MT 520A) may be NG-5G-S-TMSI (Temporary Mobile Subscriber Identity) or international mobile subscriber identity (IMSI) of the existing specifications. The ID may be an ID dedicated to a newly defined NCR apparatus. The gNB 200 may be configured with the desired cell list by OAM. Alternatively, the gNB 200 may be notified of and configured with the desired cell list from the AMF 300A as in a third operation pattern to be described later.

In step S402, the NCR-MT 520A connects to the current serving cell.

In step S403, gNB 200 may determine whether or not its own cell (serving cell of NCR-MT 520A) is a desired cell on the basis of the desired cell list that is held.

When the own cell (serving cell of the NCR-MT 520A) is the desired cell (step S403: YES), the gNB 200 performs the NCR configuration on the NCR-MT 520A in step S404. The gNB 200 may control the NCR apparatus 500A using the above-described side control information.

In step S405, the NCR-MT 520A considers the current serving cell to be the desired cell and stores the desired cell information. Thereafter, when the NCR-MT 520A is connected to an undesired cell due to deterioration of a radio situation or the like, the NCR-MT 520A notifies the undesired cell of the desired cell information (see the first operation pattern described above).

In this operation example, the gNB 200 can be considered to implicitly notify the NCR-MT 520A that the own cell is the desired cell through the NCR configuration information. However, the gNB 200 may explicitly notify the NCR-MT 520A that the own cell is the desired cell. For example, the gNB 200 may transmit a desired cell notification indicating that the own cell is the desired cell to the NCR-MT 520A.

In the case of NO in step S403, the gNB 200 may notify the NCR-MT 520A that the own cell is not the desired cell. For example, the gNB 200 may transmit an undesired cell notification indicating that the own cell is not the desired cell to the NCR-MT 520A. In this case, the NCR-MT 520A does not perform the process of step S405.

### (1.10.3) Third Operation Pattern of Connection Control

In the present operation pattern, it is assumed that the mobile management apparatus AMF 300A holds and manages a correspondence relationship between the NCR apparatus 500A and the desired cell (that is, the desired cell list). The correspondence relationship may be configured by the OAM, or information on the correspondence relationship may be provided from other CN functions (NF: Network Functions) to the AMF 300A. Under such a premise, the AMF 300A transmits desired cell information to the gNB 200. That is, each gNB 200 subordinate to the AMF 300A is notified of the desired cell information from the AMF 300A. This eliminates the need to manually configure the desired cell information for the NCR apparatus 500A and/or each gNB 200.

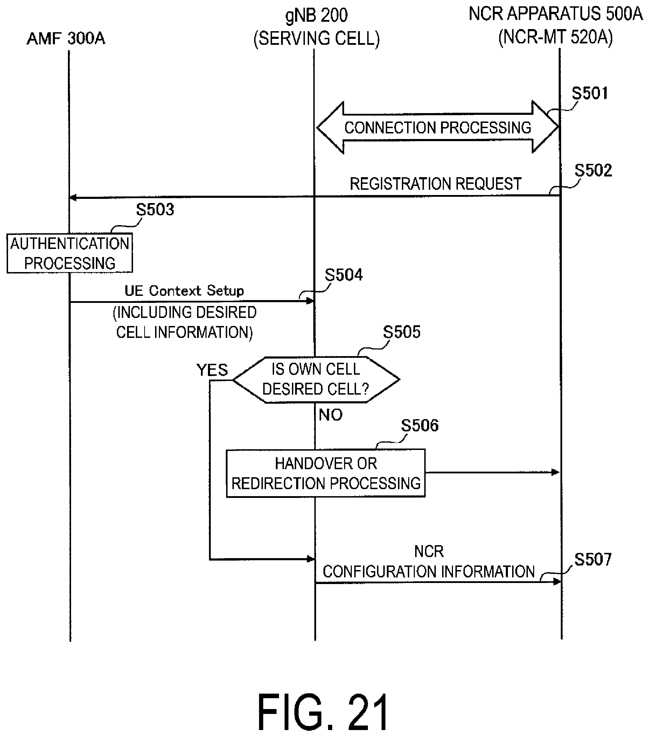

FIG. 21 is a diagram illustrating an example of the operation of the mobile communication system 1 according to the present operation pattern. Descriptions of operations that overlap the above-described operation patterns will be omitted.

In step S501, the NCR-MT 520A connects to the cell of gNB 200 and establishes an RRC connection.

In step S502, the NCR-MT 520A transmits a NAS message to the AMF 300A to make a registration request. The NAS message may include an ID of the NCR apparatus 500A (NCR-MT 520A).

In step S503, AMF 300A performs authentication processing of NCR-MT 520A (NCR apparatus 500A) based on the registration request. When the authentication of the NCR-MT 520A is successful, the desired cell of the NCR-MT 520A is derived based on the held desired cell list.

In step S504, the AMF 300A transmits a UE Context Setup message (or a UE Context Modification message), which is an NG-AP (Application Protocol) message, to the gNB 200. In this message, the UE Context of the NCR-MT 520A includes the desired cell information. The gNB 200 checks the desired cell information of the UE context.

In step S505, gNB 200 determines whether or not its own cell (serving cell of NCR-MT 520A) is a desired cell based on the desired cell information. When the own cell is the desired cell (step S505: YES), the gNB 200 performs the NCR configuration on the NCR-MT 520A (see the second operation pattern described above) in step S507.

On the other hand, when the own cell is not the desired cell (step S505: NO), the gNB 200 moves and connects the NCR-MT 520A (NCR apparatus 500A) to the desired cell through handover or redirection in step S506. Alternatively, the gNB 200 may release the RRC connection of the NCR-MT 520A.

### (1.10.4) Fourth Operation Pattern of Connection Control

In the present operation pattern, it is assumed that gNB 200 knows the desired cell of NCR apparatus 500A as in the second and third operation patterns described above. Under such a premise, information exchange of desired cell information is performed with the gNB 200 in advance. For example, the gNB 200 transmits, to the adjacent gNB, association information in which the ID of the NCR apparatus 500A managed by itself is associated with the desired cell ID. Under the assumption that NCR-MT 520A (NCR apparatus 500A) does not move, information of NCR apparatus 500A may be exchanged with adjacent gNBs, and thus information exchange may be performed by an Xn interface which is an inter-base station interface.

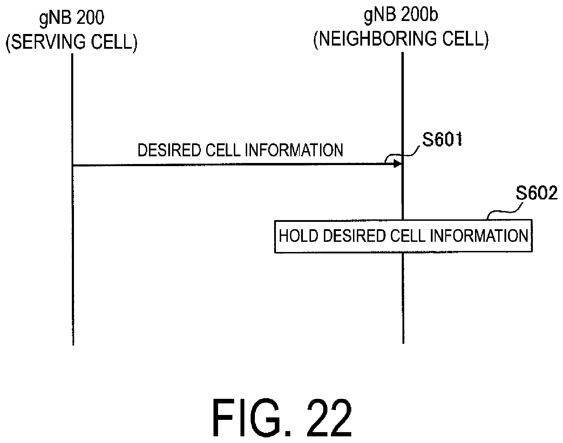

FIG. 22 is a diagram illustrating an operation example of the mobile communication system 1 according to the present operation pattern. Redundant description of operations that overlap the operations of the first operation pattern described above will be omitted.

In step S601, the gNB 200a transmits to the adjacent gNB 200b an Xn message including the association information between the ID of the NCR apparatus 500A managed by itself and the desired cell information of the NCR apparatus 500A.

In step S602, the gNB 200b that has received the association information stores the association information. When the NCR apparatus 500A accesses the gNB 200b, the gNB 200b may refer to the association information to move and connect the NCR apparatus 500A to the desired cell.

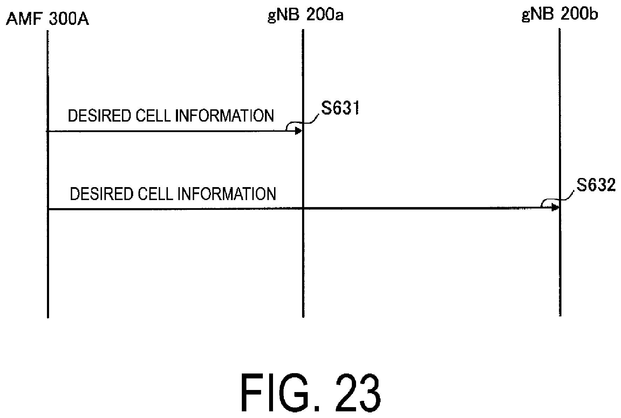

This operation example is an example in which information is exchanged between adjacent gNB 200. However, as in the third operation pattern described above, when the AMF 300A knows the desired cell of the NCR apparatus 500A, the gNB 200 in the area managed by the AMF 300A may be notified of the desired cell information in advance. That is, the AMF 300A notifies each gNB 200 within the area managed by the AMF 300A of association information between the desired cell and the NCR apparatus 500A. FIG. 23 is a diagram illustrating another operation example of the mobile communication system 1 according to the present operation pattern.

In steps S631 and S632, the AMF 300A transmits an NG message including association information in which the NCR apparatus 500A managed by the 500A is associated with information on the desired cell of the NCR apparatus 500A to each gNB 200 managed by (connected to) the AMF 300A.

Each gNB 200 that has received the association information stores the association information. When the NCR apparatus 500A accesses each gNB 200, the gNB 200 may refer to the association information and move and connect the NCR apparatus 500A to a desired cell.

### (1.10.5) Fifth Operation Pattern of Connection Control

In each of the above-described operation patterns, an example in which the gNB 200 issues a redirection indication to the NCR-MT 520A has been described. When the gNB 200 transmits an RRC release message including redirection information to the NCR-MT 520A as a redirection indication, the NCR-MT 520A transitions to the RRC idle state, camps on another cell, and is connected to the other cell. However, in the current specification of redirection, a redirection destination can be designated only on a frequency basis, and cannot be designated in units of cells. In the present operation pattern, a redirection destination can be designated on a cell-by-cell basis, and the NCR-MT 520A can be moved to and connected to the desired cell. That is, in the present operation pattern, the NCR-MT 520A (NCR apparatus 500A) receives a redirection indication including a desired cell ID from any cell of the network 5, transitions to the RRC idle state in response to the reception of the redirection indication, and selects the desired cell indicated by the desired cell ID.

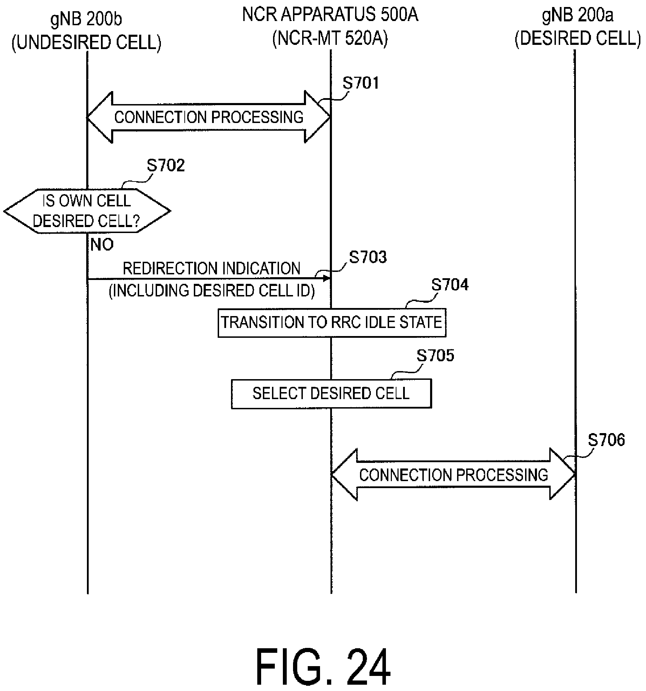

FIG. 24 is a diagram illustrating an operation example of the mobile communication system 1 according to the present operation pattern. Redundant description of operations that overlap the operations of the first operation pattern described above will be omitted.

In step S701, NCR-MT 520A connects to the undesired cell, which is a cell in gNB 200b.

In step S702, the gNB 200b determines whether or not the own cell (serving cell of the NCR-MT 520A) is the desired cell in the same manner as in the first operation pattern and the third operation pattern described above, and derives and specifies the desired cell when the own cell is not the desired cell.

In step S703, the gNB 200b transmits a redirection indication to the NCR-MT 520A. The redirection indication may be an RRC release message including redirectedCarrierInfo, which is an existing information element indicating the frequency of the redirection destination, or a new information element for redirection of the NCR apparatus 500A. In this operation pattern, the gNB 200b includes the cell ID (desired cell ID) of the desired cell in the RRC release message.

In step S704, the NCR-MT 520A transitions to the RRC idle state in response to reception of the redirection indication.

In step S705, the NCR-MT 520A selects a cell (desired cell) of the cell ID designated by the redirection indication and camps on the cell. Here, the NCR-MT 520A may select a corresponding cell when the corresponding cell is cell satisfying a predetermined quality criterion (that is, a suitable cell). The predetermined quality criterion may be a quality criterion (S-criterion) defined exclusively for NCR-MT 520A. The quality criterion is a criterion that is less strict than a normal quality criterion, and a parameter (for example, a radio quality threshold) may be configured through, for example, an SIB or the like.

In step S706, the NCR-MT 520A connects to the desired cell, which is a redirection destination cell, and establishes an RRC connection.

When the NCR-MT 520A cannot select the desired cell, that is, when the cell (desired cell) of the cell ID designated by the redirection indication is not a suitable cell, an appropriate suitable cell (undesired cell) may be selected to camp on. In this case, the NCR-MT 520A may store the fact that the desired cell could not be selected as log information. The log information includes the cell ID of the desired cell. When connected to a cell, the NCR-MT 520A may transmit a report containing the log information to the cell. Such log information may be used for optimization for network operation.

### (1.10.6) Sixth Operation Pattern of Connection Control

In the present operation pattern, the NCR-MT 520A receives from the network 5 a list of cells allowed as a connection destination or camping destination for the NCR apparatus 500A (also referred to as an "allowed cell list") and/or a list of cells prohibited as a connection destination or camping destination for the NCR apparatus 500A (also referred to as a "block cell list"). The list is an example of cell information for specifying the desired cell. The NCR-MT 520A may connect to the desired cell based on the list.

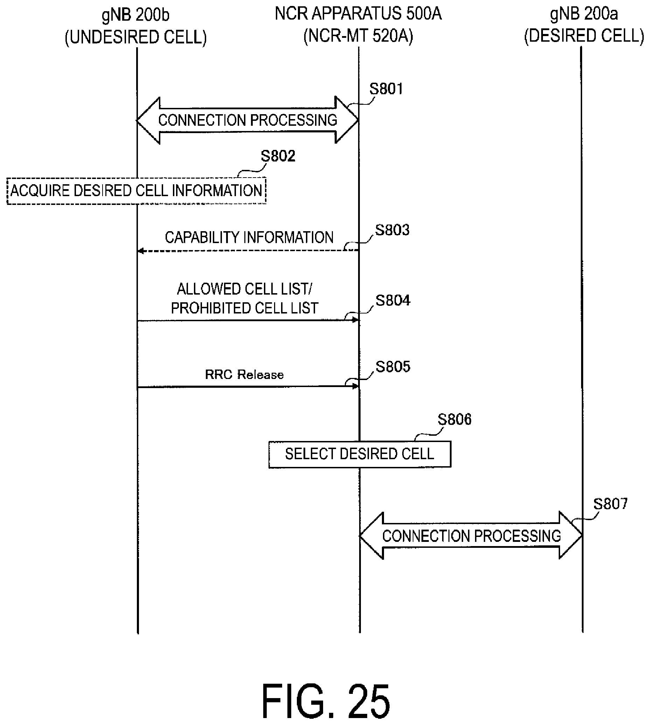

FIG. 25 is a diagram illustrating an operation example of the mobile communication system 1 according to the present operation pattern. Redundant description of operations that overlap the operations of the first operation pattern described above will be omitted.

In step S801, NCR-MT 520A connects to a cell of gNB 200b. The cell may be an undesired cell. The NCR-MT 520A need not recognize the desired cell.

In step S802, the gNB 200b acquires desired cell information. For example, the gNB 200b may acquire information on the desired cell(s) of the NCR-MT 520A from the AMF 300A in the same manner as in the third operation pattern described above. Alternatively, the gNB 200b may be configured with the information from the OAM.

In step S803, the NCR-MT 520A (NCR apparatus 500A) may transmit capability information of its NCR-Fwd 510A to the gNB 200. The capability information may include frequency information supported by the NCR-Fwd 510A. From the capability information, the gNB 200b may generate (a list of) cell IDs to which the NCR-MT 520A is to be camped/connected (or able to camp/connect).

In step S804, the gNB 200b transmits the allowed cell list and/or the block cell list to the NCR-MT 520A. The NCR-MT 520A stores the received list.

In step S805, the gNB 200b transitions NCR-MT 520A to the RRC idle state (or RRC inactive state). The NCR-MT 520A holds the list even after transitioning to the RRC idle state (or RRC inactive state).

In step S806, the NCR-MT 520A may perform cell reselection by regarding (frequencies of) cells included in the allowed cell list as a highest priority. The NCR-MT 520A may perform cell reselection by regarding (frequencies of) cells included in a block cell list as a lowest priority. As a result, the NCR-MT 520A (re-)selects the desired cell according to the list.

In step S807, the NCR-MT 520A connects to the desired cell and establishes an RRC connection.

### (2) Second Embodiment

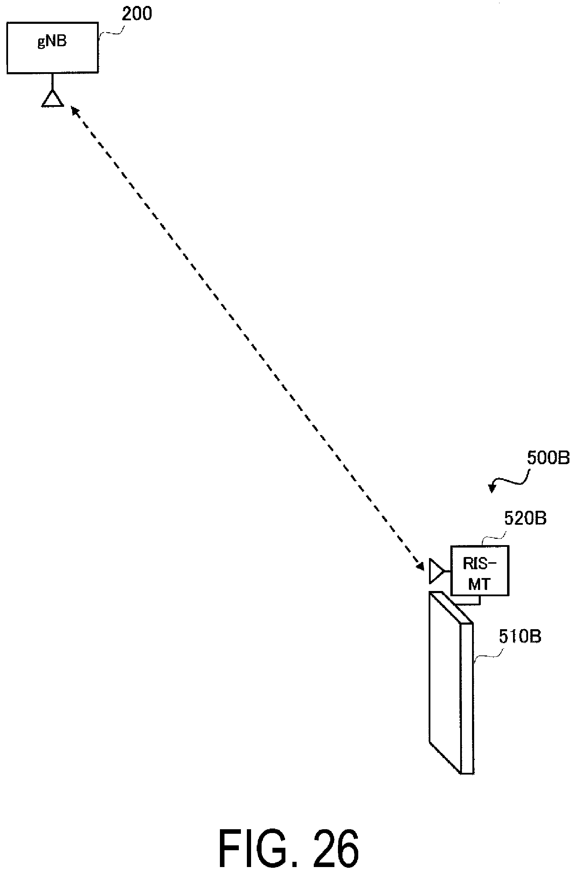

A second embodiment will be described focusing on differences from the embodiment described above. As illustrated in FIG. 26, a relay apparatus according to the second embodiment is a Reconfigurable Intelligent Surface (RIS) apparatus 500B configured to change a propagation direction of an incident radio wave (radio signal) by reflection or refraction. The "NCR" in the present embodiments described above may be read as a "RIS".

The RIS is a type of a repeater (hereinafter, also referred to as a "RIS-Fwd") capable of performing beamforming (directivity control) in the same and/or similar way to the NCR by changing the characteristics of metamaterials. The RIS may be able to change a range (distance) of a beam by controlling a reflection direction and/or a refraction direction of each unit element. For example, the RIS may have a configuration capable of controlling the reflection direction and/or refraction direction of each unit element, and focusing on a near UE (directing a beam) or focusing on a far UE (directing a beam).

The RIS apparatus 500B includes a new UE (hereinafter referred to as "RIS-MT") 520B which is a control terminal for controlling the RIS-Fwd 510B. The RIS-MT 520B controls the RIS-Fwd 510B in cooperation with the gNB 200 by establishing a wireless connection to the gNB 200 and performing wireless communication with the gNB 200. The RIS-Fwd 510B may be a reflective RIS. Such an RIS-Fwd 510B reflects an incident radio wave to change a propagation direction of the radio wave. Here, a reflection angle of the radio wave can be variably configured. The RIS-Fwd 510B reflects radio waves incident from the gNB 200 toward the UE 100. The RIS-Fwd 510B may be a transmissive RIS. Such an RIS-Fwd 510B refracts an incident radio wave to change the propagation direction of the radio wave. Here, a refraction angle of the radio wave can be variably configured.

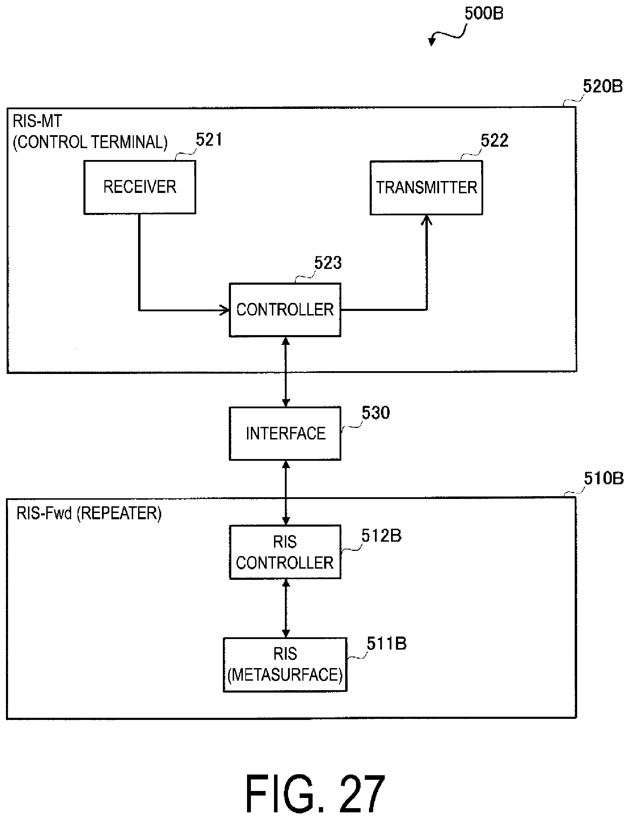

FIG. 27 is a diagram illustrating a configuration example of the RIS-Fwd (repeater) 510B and the RIS-MT (control terminal) 520B according to the present embodiment. The RIS-MT 520B includes a receiver 521, a transmitter 522, and a controller 523. Such a configuration is the same as, and/or similar to, that in the present embodiment described above. The RIS-Fwd 510B includes a RIS 511B and a RIS controller 512B. The RIS 511B is a metasurface configured using a metamaterial. For example, RIS 511B is configured by disposing extremely small structures relative to the wavelength of radio waves in an array, and the direction and/or beam shape of the reflected waves can be arbitrarily designed by making the structures different shapes depending on their disposition location. The RIS 511B may be a transparent dynamic metasurface. The RIS 511B may be configured by stacking a transparent glass substrate on transparent version of a metasurface substrate on which a large number of small structures are regularly disposed, and may be capable of dynamically controlling three patterns of a mode of transmitting an incident radio wave, a mode of transmitting a part of a radio wave and reflecting a part thereof, and a mode of reflecting all radio waves by minutely moving the stacked glass substrate. The RIS controller 512B controls the RIS 511B in response to a RIS control signal from the controller 523 in the RIS-MT 520B. The RIS controller 512B may include at least one processor and at least one actuator. The processor interprets a RIS control signal from the controller 523 in the RIS-MT 520B to drive the actuator in response to the RIS control signal.

### (3) Other Embodiments

In the connection control to the desired cell described above, the NCR-MT 520A may perform control to select (or reselect) the desired cell in the cell selection or cell reselection process. For example, the NCR-MT 520A that holds the desired cell information may perform cell selection or cell reselection targeting only the desired cell based on the desired cell information. In the process of cell selection or cell reselection, the NCR-MT 520A may perform control such that a desired cell is selected by assigning, for example, an infinite offset to a measurement result of radio qualities measured for the desired cell.

In the above-described embodiment, an example in which the relay apparatus that performs relay transmission is the NCR apparatus 500A or the RIS apparatus 500B has been described. However, the relay apparatus that performs relay transmission is not limited to the NCR apparatus 500A or the RIS apparatus 500B, and may be an integrated access and backhaul (IAB) node defined in the technical specifications of 3GPP.

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although the term "network node" mainly refers to a base station, the network node may also refer to an apparatus of a core network or a part (CU, DU or RU) of a base station.

Although in the embodiment described above, an example in which the base station is an NR base station (gNB) has been described, the base station may be an LTE base station (eNB). The base station may be a relay node such as the IAB node. The base station may be a distributed unit (DU) of the IAB node. The UE 100 may be a mobile termination (MT) of the IAB node.

A program causing a computer to execute each of the processes performed by the communication apparatus according to the embodiment described above, for example, the UE 100 (NCR-MT 520A and RIS-MT 520B) or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include," "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

This application claims priority to US Provisional Patent Application No. 63/421779 (filed on November 2, 2022), the contents of which are incorporated herein by reference in their entirety.

### (4) Supplement 1

Features relating to the embodiments described above are described below as supplements.

### Supplement 1

A mobile communication system including:
a network; and
a relay apparatus configured to perform relay transmission for relaying a radio signal transmitted between the network and a user equipment, wherein
the relay apparatus is configured to connect to a cell selected through cell selection or cell reselection and perform the relay transmission, and
cell information for specifying a desired cell determined to be a connection destination of the relay apparatus between the network and the relay apparatus or between entities in the network.

### Supplement 2

The mobile communication system according to supplement 1, wherein the relay apparatus transmits the cell information to a cell to which the relay apparatus is connected.

### Supplement 3

The mobile communication system according to supplement 1 or 2, wherein the receives configuration information related to the relay transmission from any cell of the network, and
relay apparatus considers a cell transmitting the configuration information to be the desired cell.

### Supplement 4

The mobile communication system according to any one of supplements 1 to 3, wherein the network includes a mobility management apparatus and a network node, and the mobility management apparatus transmits the cell information to the network node.

### Supplement 5

The mobile communication system according to any one of supplements 1 to 4, wherein the network includes a first network node and a second network node, and the first network node transmits the cell information to the second network node.

### Supplement 6

The mobile communication system according to supplement 4, wherein the mobility management apparatus transmits to the network node association information in which identification information indicating the relay apparatus is associated with the cell information.

### Supplement 7

The mobile communication system according to any one of supplements 1 to 6, wherein the relay apparatus
receives a redirection indication including the cell information from any cell of the network, and
transitions to a radio resource control (RRC) idle state and selects the desired cell indicated by the cell information in response to reception of the redirection indication.

### Supplement 8

The mobile communication system according to any one of supplements 1 to 7, wherein the cell information includes a list of cells allowed as connection destinations or camp destinations of the relay apparatus and/or a list of cells prohibited as connection destinations or camp destinations of the relay apparatus, and
the relay apparatus receives the list from any cell of the network.

### Supplement 9

The mobile communication system according to any one of supplements 1 to 8, wherein the relay apparatus is an apparatus configured to change a propagation state of a radio signal transmitted between the network and the user equipment without demodulating or modulating the radio signal.

### Supplement 10

A relay apparatus used in a mobile communication system, the relay apparatus including:
a repeater configured to perform relay transmission for relaying a radio signal transmitted between a network and a user equipment; and
a control terminal configured to connect to a cell selected through cell selection or cell reselection and control the relay transmission, wherein
the control terminal is configured to communicate, with the network, cell information for specifying a desired cell determined to be a connection destination of the relay apparatus.

### Supplement 11

A network apparatus provided in a network of a mobile communication system, the network apparatus including:
a communicator configured to communicate with a relay apparatus or another network apparatus, wherein
the relay apparatus is an apparatus configured to perform relay transmission for relaying a radio signal transmitted between the network and a user equipment, and
the communicator communicates, with the relay apparatus or the other network apparatus, cell information for specifying a desired cell determined to be a connection destination of the relay apparatus.

### (5) Supplement 2

### Introduction

In RAN #97e, a new study item for the network-controlled repeater (NCR) has been agreed. In RAN2#119bis-e, a first discussions on NCR were held and the following agreement was reached:

### Agreements:

The RAN2 confirms that the NCR-MT uses RRC signaling to receive the side control information. How the side control information itself is transmitted (via RRC, DCI or MAC CE) is left to the RAN1 (the RAN2 can discuss an initial RAN1 determination and review the RAN1 determination when necessary).

NCR-MT supports the RRC connected and RRC idle states, and supports the RRC inactive state, which requires further study (such as whether to support this as an option or not).

NCR-MT supports SRB0/1/2 and DRB is optional. The maximum number of DRBs requires further consideration.

NCR-MT shall ignore cellBarred, cellReservedForOperatorUse, cellReservedForFutureUse, cellReservedForOtherUse, intraFreqReselection indication and UAC configuration when broadcast in system information.

### - RRM functions supported by the NCR-MR:

Cell selection is essential.

Further consideration is needed for cell reselection, RLM, BFD, and BFR.

In this supplement, further consideration of the RAN2 issue for NCR is discussed.

### Discussion

### Support to RRC Inactive

RAN2 postponed determining whether or not to support the RRC inactive state of NCR as an option.

The NCR-MT supports RRC connected and RRC idle states, and supports RRC inactive states that need further consideration (such as whether to support this as an option or not).

Considering that the NCR is a network node and power supply is generally not interested, RRC inactive is not very useful since RRC inactive was introduced mainly for power saving of the UE. For IAB-MT, RRC inactive was also not found to be useful, but was supported without being optimized. This is mainly aimed at minimizing standardization effort. Compared to IAB, NCR is expected to be simpler and less complex. Therefore, even when this is optional, it should be avoided as much as possible to support useless functions.

For the UE, it is essential that RRC inactivity is supported by capability signaling. That is, the NCR-MT does not transmit the corresponding capability bit. Therefore, the NCR should not support RRC inactive.

Proposal 1: The RAN2 should agree that the NCR-MT does not support the RRC inactive state.

### Corresponding DRB number

The RAN2 has agreed that the NCR optionally supports DRBs, but how many DRBs can be supported is not yet determined.

The NCR-MT supports SRB0/1/2 and the DRB is optional. The maximum number of DRBs requires further consideration.

Referring to the capability of the RedCap UE, the maximum number of supported DRBs is 8, which is one possibility. On the other hand, since the DRB is mainly assumed to transfer OAM traffic, a minimum requirement can be satisfied with one or two DRBs.

Proposal 2: The RAN2 should assume that the maximum number of DRB of NCR-MT is 2 to 8.

### Cell reselection, support of RLM, BFD, and BFR

Although RAN2 has agreed that NCR supports cell reselection, cell reselection, RLM, BFD and BFR need further consideration.

### RRM functions supported by NCR-MR:

Cell selection is essential.

Further study is required on cell reselection, RLM, BFD, and BFR.

Since the NCR is intended to extend the coverage of the FR2, there exists a possibility that the control link, the backhaul link and the access link are operated in the FR2. In FR2, a radio wave situation changes greatly, and signals are susceptible to disturbance such as temporal disturbance.

With respect to the RLM, the NCR-MT needs to monitor the quality of the control link periodically because the gNB is considered to be unable to control the NCR when the control link is bad. When the backhaul link and the access link are on the same channel, monitoring the quality of these links is also considered equivalent.

Regarding the BFD and the BFR, since there exists a possibility that the beam is dropped in the operation in the FR2, it is considered to be effective that the NCR-MT performs the recovery of the beam. For beamforming of the backhaul link, the gNB needs to know a proper beam of the NCR-MT.

RAN1 has also agreed to support adaptive beams for the control link and the backhaul link with details of the considerations. Therefore, BFD and BFR are particularly required for adaptive beams.

### Agreements:

The following points should be the capabilities of the NCR:
· UL simultaneous transmission of C-link and backhaul link
· Adaptive beam for C-link/backhaul link
· Note 1: Fixed beam of C-link/backhaul link is default function.
· Note 2: UL transmission subjected to TDM of C-link and the backhaul link is the default function.
· Considerations: how to define the adaptive beam function of the C-link/backhaul link.

From the above, RLM, BFD and BFR are considered to be indispensable particularly for the development of FR2. These functions are likely not to be necessary for specific NCR implementations, such as supporting only FR1 with fixed beams, or for a specific deployment policy, such as disposing NCR only at a place with a good view, but serve to recover from an error case or abnormal state. Therefore, RLM, BFD, and BFR can be supported.

Proposal 3: RAN2 should agree that NCR-MT supports RLM, BFD, and BFR.

Cell reselection may not be required frequently under normal conditions, but may be required when a failure occurs. Considering that signals are blocked in the FR2, cell reselection is required. On the other hand, some companies believe that this function is not necessary. Thus, the optional support of cell reselection is considered to meet various requirements and enable several implementation options.

Proposal 4: RAN2 should agree that NCR-MT optionally supports cell reselection.

In the current agreement, only cell selection is supported as a mobility function. Since cell selection is largely left to implementation, the NCR-MT can select any suitable cell. The OAM can configure the NCR-MT to select the desired cell to which the NCR-MT should connect. However, in some cases, for example, due to radio situation, the NCR-MT may camp on/connect to an undesired cell instead of the desired cell. Such erroneous states may occur regardless of whether or not cell reselection and/or handover is supported. In this case, it should be considered how the undesired cell causes the NCR-MT to camp on/correct with the desired cell. Currently, redirection and handover are considered as candidates. However, it is unclear how the undesired cell can specify the desired cell to which the NCR-MT should connect.

Proposal 5: RAN2 should discuss how the NCR-MT moves to the desired cell to which the NCR-MT should connect, and how the desired cell is identified by the undesired cell to which the NCR-MT erroneously connects.

### NCR Capability Signal

Another issue is how the gNB knows the capabilities of the NCR-Fwd (operating frequency, number and resolution of beamforming, output power and dynamic range, and the like) since the NCR-Fwd is an RF repeater and does not support protocols. It is very easy to assume that the NCR-MT will notify the gNB of the capabilities of the connected NCR-Fwd in addition to its own (that is, NCR-MT) capabilities.

For this purpose, it is optional to define a new capability message, that is an NCR Fwd capability message, or to define a new IE in the existing capability signaling. Further consideration needs to be given to what NCR-Fwd capabilities need to be reported to the gNB.

Proposal 6: RAN2 should agree that the NCR-MT will notify the gNB of the NCR-Fwd capability, for example, in a new NCR-Fwd capability message. Further consideration is needed as to what capability needs to be reported.

### Multi-Beam NCR

As illustrated in FIG. 1, whether the NCR can handle a plurality of beams is also worth studying. Thus, improved spectral efficiency, enhanced coverage, and scheduling flexibility for a plurality of UEs are expected.

A simple RF repeater does not have resource block selectivity. That is, all signals within the system bandwidth are amplified and transmitted with a single weight (beamforming vector). On the other hand, advanced RF repeaters may manage a plurality of beams for a plurality of UEs.

Subband operation has been proposed in RAN1 for such advanced radio frequency repeaters. As shown in a previous RAN1 #110bis-e meeting, there exists great support for frequency-selective subband operation. RAN1 postponed discussion of SCI enhancement for sub-band operation until RAN4 submits a conclusion about FR2 to RAN1. This function should be supported when the RAN4 concludes that it is beneficial to do so. In this case, the RAN2 must provide signaling and configuration to support a subband operation.

Therefore, from a RAN2 perspective, it is important that the Rel-18 NCR supports the implementation of such advanced RF repeaters.

Proposal 7: RAN2 should agree on signaling and configuration to support NCR that can simultaneously process a plurality of beams of different UEs.

When multi-beam NCR is supported, a discussion may arise as to whether one NCR node (or one NCR-MT) can support a plurality of NCR-Fwds, from a RAN2 point of view. Similarly, an additional consideration may be whether one NCR-Fwd can support the control of a plurality of "antenna array subgroups." When a plurality of NCR-Fwds are present, the NCR needs to simultaneously handle different beamforming vectors for each NCR-Fwd indicated by the gNB.

For example, this is a case in which the NCR is disposed at the cell edge. In this case, a plurality of NCR-Fwds are needed to handle different beams for different access links belonging to different gNBs.

These cases affect not only the configuration of the NCR but also the design of the side control information. Therefore, RAN2 should discuss configuration models to enable various implementations of multi-beam NCR.

Proposal 8: For example, whether one NCR-MT controls a plurality of NCR-Fwds and/or whether one NCR-Fwd supports a plurality of antenna array subgroups.

### Deployment Options

TR38. 867 incorporates the assumption of the operating frequencies of NCR-MT and NCR-Fwd.

At least one of the carriers of the NCR-MT needs to operate in the frequency band transferred from the NCR-Fwd. The NCR-MT and NCR-Fwd operating in the same frequency band are then prioritized for investigation.

As a baseline, the C-link and the backhaul link (at least when NCR-MT and NCR-Fwd are operating in the same frequency band) are expected to experience the same large-scale characteristics of the channel, that is, Type-A and Type-D channel characteristics (if applicable).

A procedure of the control link may be intended to be simplified by utilizing the same channel conditions as the backhaul link.

Observation 1: The control link and the backhaul link operating at the same frequency have the same radio channel conditions.

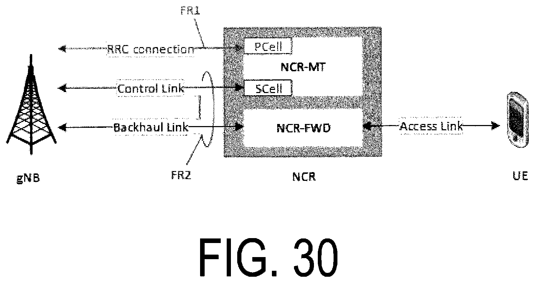

Meanwhile, it is worth studying whether the NCR-MT can support carrier aggregation (CA) or dual connectivity (DC) and realize robust control plane connectivity. For example, as illustrated in FIG. 30, NCR-MT can be configured with the PCell of FR1 (for RC connection) and the SCell of FR2 (for Side Control information, the same frequency as NCR-Fwd).

We consider that the configuration of CA/DC for NCR-MT does not violate the RAN plenary decision and TR restrictions as long as the SCell for the control link operates on the same frequency as the NCR-Fwd for the backhaul link. A robust RRC connection in the FR1/PCell provides various advantages when considering that the NCR is a network node. This is very similar to the CP/UP split configuration specified in the IAB.

Proposal 9: For a more robust C-plane connection, the RAN2 should discuss whether to configure NCR-MT with carrier aggregation or dual connectivity.

Another scenario is user plane improvement using CA/DC. The gNB configures the UE with CA or DC to realize a wide bandwidth and high data rate. In this case, the NCR-Fwd needs to transfer a plurality of carriers. When these carriers are intra-band, only one control link may function to some extent to control the NCR of these carriers. However, when these carriers are an inter-band, no correlation exists between the control link and the backhaul link, that is, the control link and the backhaul link are operated at different frequencies, and thus, it is questionable whether the control link and the backhaul link function with only one control link. Therefore, the RAN2 needs to discuss whether/how the NCR functions for a plurality of carriers when the UE is configured with CaS or DCs.

Proposal 10: In order to support a wide bandwidth of U-plane, the RAN2 should discuss whether and how the NCR transfers a plurality of carriers on the backhaul link and the access link when the UE is configured with carrier aggregation or dual connectivity.

### REFERENCE SIGNS

1: Mobile communication system
100: UE
200: gNB
210: Transmitter
220: Receiver
230: Controller
240: Backhaul communicator
500A: NCR apparatus
510A: NCR-Fwd
520A: NCR-MT
500B: RIS apparatus
511A: Wireless unit
511 a: Antenna
511b: RF circuit
511c: Directivity controller
512A: NCR controller
512B: RIS controller
521: Receiver
522: Transmitter
523: Controller
530: Interface

## Claims

1. A mobile communication system comprising:
a network; and
a relay apparatus configured to perform relay transmission for relaying a radio signal transmitted between the network and a user equipment, wherein
the relay apparatus is configured to connect to a cell selected through cell selection or cell reselection and perform the relay transmission, and
cell information on a connected cell to which the relay apparatus is connectable is configured, from a network apparatus operating the network, for the relay apparatus.

2. The mobile communication system according to claim 1, wherein the relay apparatus transmits the cell information to a cell to which the relay apparatus is connected.

3. The mobile communication system according to claim 1, wherein
the relay apparatus
receives configuration information related to the relay transmission from any cell of the network, and
considers a cell transmitting the configuration information to be the connected cell.

4. The mobile communication system according to claim 1, wherein
the network comprises a mobility management apparatus and a network node, and
the mobility management apparatus transmits the cell information to the network node.

5. The mobile communication system according to claim 1, wherein
the network comprises a first network node and a second network node, and
the first network node transmits the cell information to the second network node.

6. The mobile communication system according to claim 4, wherein the mobility management apparatus transmits to the network node association information in which identification information indicating the relay apparatus is associated with the cell information.

7. The mobile communication system according to claim 1, wherein
the relay apparatus
receives a redirection indication comprising the cell information from any cell of the network, and
transitions to a radio resource control (RRC) idle state and selects the connected cell indicated by the cell information in response to reception of the redirection indication.

8. The mobile communication system according to claim 1, wherein the cell information comprises a list of cells allowed as connection destinations of the relay apparatus.

9. The mobile communication system according to any one of claims 1 to 8, wherein the relay apparatus is an apparatus configured to change a propagation state of a radio signal transmitted between the network and the user equipment without demodulating or modulating the radio signal.

10. A relay apparatus used in a mobile communication system, the relay apparatus comprising:
a repeater configured to perform relay transmission for relaying a radio signal transmitted between a network and a user equipment; and
a control terminal configured to connect to a cell selected through cell selection or cell reselection and control the relay transmission, wherein
the control terminal is configured, from a network apparatus operating the network, with cell information related to a connected cell to which the relay apparatus is connectable.

11. A network apparatus for operating a mobile communication system, the network apparatus comprising:
a communicator configured to communicate with a relay apparatus or another network apparatus, wherein
the relay apparatus is an apparatus configured to perform relay transmission for relaying a radio signal transmitted between the network and a user equipment, and
the communicator configures, for the relay apparatus, cell information related to a connected cell to which the relay apparatus is connectable.
